# EUROPEAN PATENT SPECIFICATION

(11) **EP 3 091 809 B1**
(45) Date of publication and mention of the grant of the patent: **29.05.2019**
(21) Application number: 14881202.7
(22) Date of filing: 28.01.2014
(51) Int. Cl.: H04W 72/12, H04W 52/36

(54) **METHOD AND DEVICE FOR REPORTING POWER HEADROOM AND USER EQUIPMENT**
VERFAHREN UND VORRICHTUNG ZUR MELDUNG VON LEISTUNGSRESERVEN UND BENUTZERGERÄT
PROCÉDÉ ET DISPOSITIF POUR RAPPORTER UNE MARGE DE PUISSANCE, ET ÉQUIPEMENT UTILISATEUR

(43) Date of publication of application: 09.11.2016
(73) Proprietor: Huawei Technologies Co., Ltd., Longgang District Shenzhen, Guangdong 518129 (CN)
(72) Inventor: ZHANG, Tao, Shenzhen Guangdong 518129 (CN); LIN, Bo, Shenzhen Guangdong 518129 (CN)
(74) Representative: Gill Jennings & Every LLP
(86) International application number: PCT/CN2014/071717
(87) International publication number: WO 2015/113232

(56) References cited:
- WO-A2-2012/021002
- WO-A2-2013/025562
- CN-A- 102 083 131
- CN-A- 102 378 245
- CN-A- 103 458 457

## Description

### TECHNICAL FIELD

The present invention relates to the communications field, and in particular, to a power headroom reporting method and apparatus, and a user equipment.

### BACKGROUND

In a conventional network architecture, user equipments (User Equipment, UE) and base stations are in a one-to-one relationship. With the development of wireless network technologies, a new network architecture in which UEs and base stations are in a one-to-multiple relationship is gradually introduced. In the new network architecture, one UE can communicate with multiple base stations simultaneously. In the multiple base stations, both a control channel and a data channel can be configured for the UE in some cells of each base station, and only a data channel can be configured for the UE in the other part of cells.

In the new network architecture, the UE separately sends uplink data to the multiple base stations based on scheduling of the multiple base stations, and transmit power consumed for sending data to each base station by the UE depends on a scheduling decision of each base station. To ensure that actual transmit power of the UE does not exceed maximum transmit power supported by the UE, all base station need to know power headroom situations of the UE.

The prior art discloses a solution for reporting a power headroom of a UE to a base station by using a power headroom report (Power Headroom Report, PHR). However, in this solution, the UE only reports, to a base station, a power headroom relative to this base station, and a base station can only know a power headroom of the UE relative to the base station itself; and therefore, a power scheduling decision is possibly not accurate enough.

WO 2013/025562 A2 refers to that A wireless transmit/receive unit (WTRU) may establish communication with a first set of cells and a second set of cells. The first set of cells may be associated with a first scheduler and the second set of cells may be associated with a second scheduler. The maximum allowed transmit power for the WTRU may be determined for and/or distributed across the first set of cells and the second set of cells.

WO 2012/021002 A2 refers to a method of reporting a power headroom.The method
includes receiving an uplink resource allocation for a first serving cell, determing whether a power headroom report is triggered, then determing a first power headroom for the first serving cell and a second power headroom for a second serving cell, and transmitting the first power headroom and the second power headroom.

CN 103458 457A a method for reporting headroom so as to report power headroom in the scenario where carriers controlled by different eNBs are aggregated for a UE, and specifically discloses the following: the power reporting device determining power headroom information about a user equipment which aggregates resources of multiple network-side equipments, wherein this information comprises power headroom information of all activated serving cells of each network-side equipment participating in aggregation, and at the same tine,when there are uplink resources in the mutiple network-side equipments participating in aggregation, the user equipment reports the power headroom information successively to the network-side equipments participating in aggregation.

### SUMMARY

Embodiments of the present invention provide a power headroom reporting method and apparatus, and a user equipment, which can improve accuracy of power scheduling by a base station.

Aspects of the invention are set out in the claims.

In the prior art, a power headroom of a UE relative to a base station is only reported to the base station, and a base station can only know a power headroom of the UE relative to the base station itself; therefore, no base station can know power headroom situations of the UE relative to all base stations, and as a result, a power scheduling decision is not accurate enough. Compared with the prior art, according to the power headroom reporting method and apparatus, and the user equipment provided in the embodiments of the present invention, a UE can send a power headroom for a first base station to a second base station and send a power headroom for the second base station to the first base station, and in this way, the first base station can perform power scheduling according to the power headroom for the second base station, and the second base station can also perform power scheduling according to the power headroom for the first base station; and therefore, a power scheduling decision made by a base station becomes more accurate.

### BRIEF DESCRIPTION OF DRAWINGS

FIG. 1A is a schematic diagram of a PHR involved in an embodiment of the present invention;
FIG. 1B is a schematic diagram of another PHR involved in an embodiment of the present invention;
FIG. 2A is a schematic structural diagram of a power headroom reporting apparatus according to Embodiment 1, Embodiment 2, and Embodiment 3 of the present invention;
FIG. 2B is a schematic structural diagram of a power headroom reporting apparatus according to Embodiment 4 of the present invention;
FIG. 3 is a flowchart of a power headroom reporting method according to Embodiment 5 of the present invention; and
FIG. 4 is a schematic structural diagram of a user equipment according to Embodiment 6 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In the present invention, a base station is a network device that performs information transfer with a UE in a radio coverage area through a mobile switching center, and includes a base station (Base Station, BS), a base station B (Node B), an evolved base station (evolved Node B, eNB), and the like.

A user equipment UE may be a mobile communications terminal, including a cellular phone (cellular phone), a personal digital assistant (personal digital assistant, PDA), a wireless modem (modem), a handheld device (handheld), a laptop computer (laptop computer), a cordless phone (cordless phone), and the like.

One UE can be connected to and communicate with multiple base stations simultaneously, for example, send uplink data to the multiple base stations separately. According to a difference between the base stations (for example, whether the base stations can generate an RRC message for the UE), the base stations may be classified into a master base station (which can generate an RRC message for the UE) and a secondary base station (which cannot generate an RRC message for the UE), and the two types of base stations both can receive data sent by the UE. For each UE, there is only one master base station, and there may be one or more secondary base stations. In the embodiments of the present invention, a master base station is referred to as a first base station, and a secondary base station is referred to as a second base station. Certainly, the master base station may also be referred to as a second base station, and the secondary base station may also be referred to as a first base station, which is not limited in the present invention.

In addition, each base station may correspond to multiple cells (also referred to as sectors), and the base station may configure a data channel in each cell for the UE. The data channel is used to transmit data information. Besides, in each base station, there is one cell in which both a data channel and a control channel can be configured. The control channel is used to transmit control information. In the embodiments of the present invention, a cell in which both a data channel and a control channel can be configured is referred to as a first cell, and other cells are referred to as second cells (in which only a data channel can be configured).

For example, the base stations specifically are eNBs, an eNB that can generate an RRC message for the UE is referred to as a master base station (Master eNB, MeNB) of the UE, and another eNB that can receive data sent by the UE is referred to as a secondary base station (Secondary eNB, SeNB) of the UE. A cell group including a cell controlled by the MeNB is referred to as a master cell group (Master Cell Group, MCG), and a cell group including a cell controlled by the SeNB is referred to as a secondary cell group (Secondary Cell Group, SCG). One MCG and one or more SCGs may serve one UE simultaneously.

A physical uplink shared channel (Physical Uplink Shared Channel, PUSCH) can be configured in all cells corresponding to an eNB (including an MeNB and an SeNB). In addition, each eNB corresponds to one cell in which both a PUSCH and a physical uplink control channel (Physical Uplink Control Channel, PUCCH) can be configured. The PUCCH is used to transfer control information, and the PUSCH is used to transfer data.

In an MCG, a cell in which both a PUSCH and a PUCCH can be configured is described as a primary cell (Primary Cell, PCell), and the PCell is a first cell. Cell (second cells) in the MCG except the PCell and all cells (including a first cell and second cells) in an SCG may be described as secondary cells (Secondary Cell, SCell). As can be seen from this, first cells include a PCell in an MCG and a cell, in which both a PUSCH and a PUCCH can be configured, in the SCG, and second cells include an SCell in the MCG and a cell, in which only a PUSCH can be configured, in the SCG. An MCG includes one first cell, and may further include one or more second cells, and each SCG includes one first cell, and may further include one or more second cells.

The following describes a power headroom.

Communication between a UE and each base station (including a first base station and a second base station) consumes some transmit power of the UE, that is, occupies partial power of power currently used by the UE. A power headroom refers to available power remaining from the power currently used by the UE, that is, a difference between maximum transmit power (rated power) of the UE and the currently used transmit power (actual power) of the UE. Actually, a power headroom (depending on a channel and a component carrier) also exists between a UE and a cell of a base station, and the power headroom refers to the power that can still be used in each cell remaining from transmit power currently used by the UE. A power headroom of the UE relative to each cell needs to be used as a basis for adjusting power of the UE in each cell by the base station; therefore, the base station needs to know the power headroom of the UE relative to each cell. Therefore, in the present invention, a power headroom of a UE relative to a base station refers to a power headroom of the UE relative to one or more cells of the base station.

A power headroom includes a first-type power headroom and a second-type power headroom.

For one cell of a base station, a first-type power headroom is equal to power obtained by subtracting power used by a data channel configured for a UE in the cell from maximum transmit power of the UE in the cell; and
a second-type power headroom is equal to power obtained by subtracting power used by the data channel configured for the UE in the cell and power used by a control channel configured for the UE in the cell from the maximum transmit power of the UE in the cell.

For a cell of one base station, a calculation formula for a first-type power headroom Type 1 PH is: Type 1 PH=P_cmax-P_PUSCH; and
a calculation formula for a second-type power headroom is: Type 2 PH=P_cmax-P_PUSCH-P_PUCCH, where
P_cmax represents maximum transmit power of a UE in the cell, P_PUSCH represents power used by a PUSCH configured for the UE in the cell, and P_PUCCH represents power used by a PUCCH configured for the UE in the cell.

As can be known with reference to the definitions of the first-type power headroom and the second-type power headroom, in a case in which only a data channel is configured in a first cell of a first base station, a UE may acquire a first-type power headroom of the UE relative to the first cell of the first base station;
in a case in which both a data channel and a control channel are configured in the first cell of the first base station, the UE may acquire a first-type power headroom of the UE relative to the first cell of the first base station and a second-type power headroom of the UE relative to the first cell of the first base station; and
in a case in which only a data channel is configured in a second cell of the first base station, the UE may acquire a first-type power headroom of the UE relative to the second cell of the first base station.

Because a control channel cannot be configured in a second cell, a second-type power headroom of the UE relative to the second cell does not exist.

As can be known with reference to the description of acquiring, by the UE, the power headroom of the UE relative to the first base station, the UE may acquire a first-type power headroom of the UE relative to a first cell of a second base station, a second-type power headroom of the UE relative to the first cell of the second base station, and a first-type power headroom of the UE relative to a second cell of the second base station.

The following describes power scheduling.

When a UE communicates with a base station, if transmit power of the UE is excessively low, the base station can barely receive any uplink data. If transmit power of the UE is excessively high, data transmission of the UE causes too much interference to data transmission of another UE. In addition, maximum transmit power supported by a UE is finite. Therefore, power of a UE needs scheduling. Moreover, power of a UE is generally scheduled by a base station.

To help a base station to make a power scheduling decision, so that power of a UE is appropriately allocated in each cell, for example, avoiding as much as possible that a sum of transmit power required by the UE in all cells exceeds a maximum transmit power supported by the UE, the UE may report a power headroom of the UE in each cell to the base station.

As an implementation manner of scheduling transmit power of a UE, the base station may use a control command to command the UE to change the transmit power of the UE in an accumulative or absolute manner. A person of ordinary skill in the art may understand that the control command is merely exemplary, and does not limit the protection scope of the present invention.

As an implementation manner of reporting, by the UE, a power headroom of the UE in each cell, the UE may perform reporting by using a power headroom report PHR.

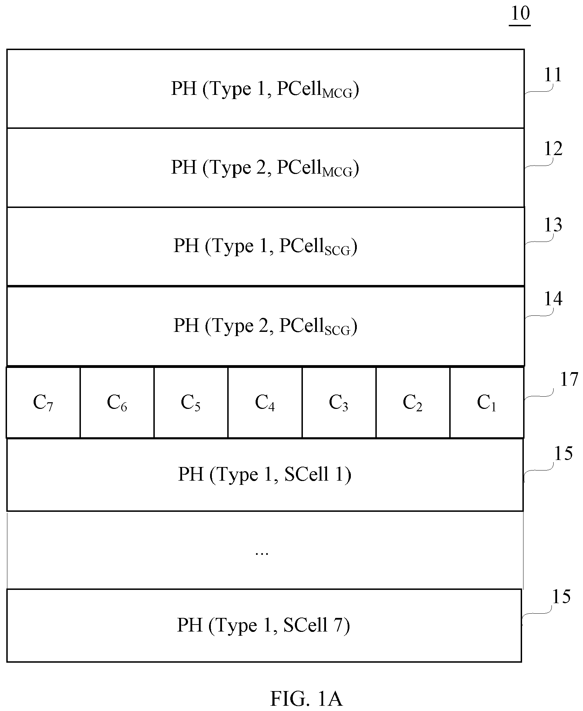

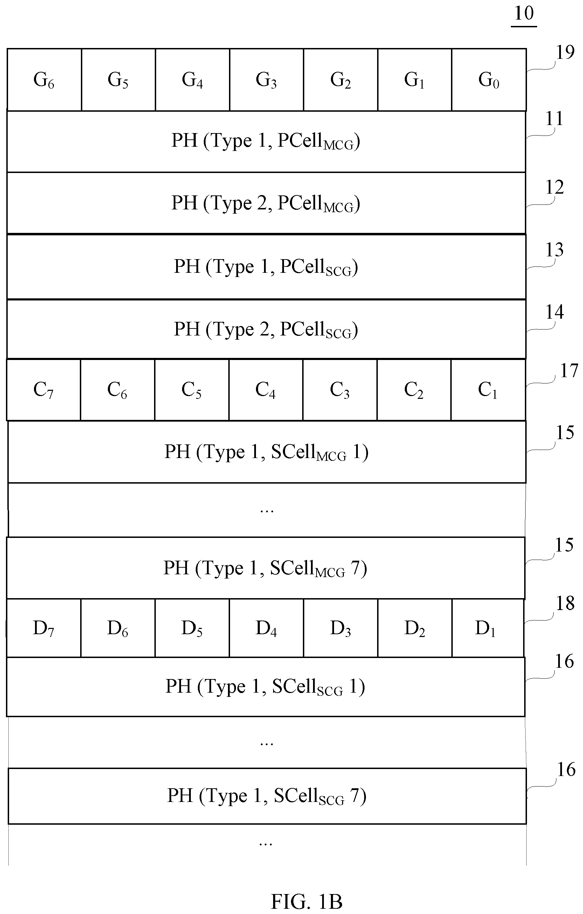

The following describes, with reference to FIG. 1A and FIG. 1B, PHRs involved in the power headroom reporting method and apparatus, and the user equipment provided in the present invention. The PHRs may be roughly classified into two types (with respective reference to FIG. 1A and FIG. 1B) according to whether a second cell of a first base station and a second cell of a second base station are uniformly numbered or separately numbered.

As shown in FIG. 1A and FIG. 1B, a PHR 10 may include multiple fields (in the figures, each row corresponds to one field), where the fields are respectively used to report, to a base station side, information about different types of power (first-type power or second-type power) of different cells (first cell or second cell) of different base stations (first base station or second base station).

For brevity and convenience, a first-type power headroom of a UE relative to a first cell of a first base station may be briefly referred to as a first-type power headroom for a first cell of a first base station. Other power headrooms may also be expressed by using similar brief references, for example, a power headroom of a UE relative to a first base station may be briefly referred to as a power headroom for a first base station.

As shown in FIG. 1A and FIG. 1B, in the PHR 10, a power field 11 is a first power field 11 for the first cell of the first base station, which is used to identify a first-type power headroom PH (Type 1, PCell_{MCG}) for the first cell of the first base station, where PCell_{MCG} represents the first cell of the first base station, Type 1 represents a first type, and PH represents a power headroom;
a power field 12 is a second power field 12 for the first cell of the first base station, which is used to identify a second-type power headroom PH (Type 2, PCell_{MCG}) for the first cell of the first base station, where PCell_{MCG} represents the first cell of the first base station, Type 2 represents a second type, and PH represents a power headroom;
a power field 13 is a first power field 13 for the first cell of the second base station, which is used to identify a first-type power headroom PH (Type 1, PCell_{SCG}) for the first cell of the second base station, where PCell_{SCG} represents the first cell of the second base station; because there may be multiple second base stations (each second base station corresponds to one first cell), the power headroom report 10 includes at least one power field 13; and
a power field 14 is a second power field 14 for the first cell of the second base station, which is used to identify a second-type power headroom PH (Type 2, PCell_{SCG}) for the first cell of the second base station; and the PHR 10 may include multiple power fields 14. It should be noted that, although both FIG. 1A and FIG. 1B only show one power field 13 and one power field 14, there may be multiple power fields 13 and multiple power fields 14 in an actual application.

As shown in FIG. 1A, in a case in which the second cell of the first base station and the second cell of the second base station are uniformly numbered, a power field 15 may be used to identify a first-type power headroom, such as PH (Type 1, SCell 1), for the second cell of the first base station or the second base station, where there may be multiple power fields 15.

Specifically, when first-type power for the second cell of the first base station exists, but first-type power for the second cell of the second base station does not exist, a power field 15 is used to identify a first-type power headroom for the second cell of the first base station; when first-type power for the second cell of the second base station exists, but first-type power for the second cell of the first base station does not exist, a power field 15 is used to identify a first-type power headroom for the second cell of the second base station; and when both first-type power for the second cell of the first base station and first-type power for the second cell of the second base station exist, a power field 15 is used to identify the first-type power headroom for the second cell of the first base station or the first-type power headroom for the second cell of the second base station.

As shown in FIG. 1A, in the power fields 15, SCell 1 represents a second cell, numbered 1, of the first base station or the second base station, and by analogy, SCell 7 represents a second cell, numbered 7, of the first base station or the second base station. PH (Type 1, SCell 1) represents a first-type power headroom for the second cell, numbered 1, of the first base station or the second base station, and by analogy, PH (Type 1, SCell 7) represents a first-type power headroom for the second cell, numbered 7, of the first base station or the second base station.

As shown in FIG. 1B, in a case in which the second cell of the first base station and the second cell of the second base station are separately numbered, a first power field 15 for the second cell of the first base station is used to identify a first-type power headroom PH (Type 1, SCell_{MCG} 1) for the second cell of the first base station, and a first power field 16 for the second cell of the second base station is used to identify a first-type power headroom PH (Type 1, SCell_{SCG} 1) for the second cell of the second base station. It should be noted that, in a case in which there are multiple second base stations, first power fields for second cells belonging to a same second base station may also be separately numbered.

In the power fields 15, SCell_{MCG} 1 represents a second cell, numbered 1, of the first base station, and PH (Type 1, SCell_{MCG} 1) represents a first-type power headroom for the second cell, numbered 1, of the first base station. In the power fields 16, SCell_{SCG} 1 represents a second cell, numbered 1, of the second base station, and PH (Type 1, SCell_{SCG} 1) represents a first-type power headroom for the second cell, numbered 1, of the second base station.

No matter whether the second cell of the first base station and the second cell of the second base station are uniformly numbered or separately numbered, the PHR 10 may further include a first power indication field for a second cell. As shown in FIG. 1A, in the case of uniform numbering, the PHR 10 further includes a first power indication field 17 for a second cell, and one indication field 17 may be used to correspond to first power fields 15 for all second cells. The indication field 17 includes at least one indication sub-field 17i (i is an integer greater than 0, such as 1, 2, 3...), that is, a first power indication sub-field 17i (corresponding to each grid in the indication field 17) for a second cell. Each indication sub-field 17i corresponds to one power field 15, and is used to indicate whether the corresponding power field 15 exists. For example, when a value of an indication sub-field 17i is 0, it indicates that a corresponding first power field for a second cell does not exist, that is, a first-type power headroom does not exist in the second cell or a first-type power headroom for the second cell is not reported; and when a value of an indication sub-field 17i is 1, it indicates that a corresponding first power field for a second cell exists, that is, a first-type power headroom exists in the second cell and is reported. It should be noted that the value of the indication sub-field 17i being 0 or 1 is merely exemplary, and other marks may also be used.

As shown in FIG. 1A, C₁ corresponds to PH (Type 1, SCell 1), C₂ corresponds to PH (Type 1, SCell 2) (not shown in the figure), ..., and C₇ corresponds to PH (Type 1, SCell 7). When a value of C₁ is 0, PH (Type 1, SCell 1) does not exist in the PHR 10. When a value of C₁ is 1, PH (Type 1, SCell 1) exists in the PHR 10.

When a first power field, corresponding to an indication sub-field 17i, for a second cell does not exist, the PHR 10 does not include the power field, thereby saving air interface resources used by the UE to report PHRs. In addition, the base station side can clearly know through the indication sub-field 17i whether the first power field, corresponding to the indication sub-field 17i, for the second cell exists.

As shown in FIG. 1B, in a case in which the second cell of the first base station and the second cell of the second base station are separately numbered, the PHR 10 may include a first power indication field 17 for the second cell of the first base station and a first power indication field 18 for the second cell of the second base station, which respectively correspond to first power fields for second cells of different base stations. There may be multiple second base stations; therefore, there may be multiple first power indication fields 18 for second cells of the second base station.

Specifically, the indication field 17 may correspond to a power field 15, and the indication field 18 may correspond to a power field 16. The indication field 17 and the indication field 18 include at least one indication sub-field 17i and at least one indication sub-field 18i respectively (i is an integer greater than 0, such as 1, 2, 3, ...), that is a first power indication sub-field 17i for a second cell of the first base station and a first power indication sub-field 18i for a second cell of the second base station. The indication sub-field 17i is used to indicate whether the corresponding power field 15 exists, and the indication sub-field 18i is used to indicate whether the corresponding power field 16 exists.

As shown in FIG. 1B, C₁ corresponds to (Type 1, SCell_{MCG} 1), and D₁ corresponds to PH (Type 1, SCell_{SCG} 1). When a value of C₁ is 0, PH (Type 1, SCell_{MCG} 1) does not exist in the PHR 10; and when a value of C₁ is 1, PH (Type 1, SCell_{MCG} 1) exists in the PHR 10. When a value of D₁ is 0, PH (Type 1, SCell_{SCG} 1) does not exist in the PHR 10; and when a value of D₁ is 1, PH (Type 1, SCell_{SCG} 1) exists in the PHR 10.

In the prior art, in a PHR, cells in an MCG (that is, second cells in the MCG other than a PCell) and cells of each SCG are uniformly numbered by default. For example, one UE has one MCG and one SCG, where the MCG has two cells and the SCG has three cells. Therefore, in the PHR, the cells are numbered by default in the following manner: the cell in the MCG other than the PCell is described as SCell 1, and three cells in the SCG are described as SCell 2, SCell 3, and SCell 4 respectively.

Actually, cells in an MCG and cells in each SCG may be separately numbered based on cell group. Therefore, if the cell in the MCG other than the PCell is still described as SCell 1, the three cells in the SCG may be described as SCell 1, SCell 2, and SCell 3. In this case, because there is a cell in the MCG described as SCell 1 and there is a cell in the SCG described as SCell 1, at least two cells are described as SCell 1 at the same time, so that the PHR cannot be used subsequently. Therefore, in the embodiments of the present invention, different fields (manifested in FIG. 1B by different subscripts of SCells in a field 15 and a field 16) are set for different cell groups, so as to distinguish between different cell groups. In this way, even though SCells in an MCG and SCells in each SCG are separately numbered in their respective cell groups, the PHR can still be used subsequently.

When a first power field, corresponding to an indication sub-field 17i or 18i, for a second cell does not exist, the PHR 10 does not include the power field, thereby saving air interface resources used by the UE to report PHRs. In addition, the base station side can clearly know through the indication sub-field 17i or 18i whether the first power field, corresponding to the indication sub-field 17i or 18i, for the second cell exists.

As shown in FIG. 1B, in a case in which a power field 15 and a power field 16 are included, the PHR 10 may further include a global indication field 19. The global indication field 19 includes at least one global indication sub-field 19i (i is a natural number 0, 1, 2, ...), and the global indication sub-field 19i is used to indicate whether corresponding first power indication fields 17 and 18 for second cells exist. For example, in the embodiments of the present invention, G₀ in FIG. 1B is used to indicate whether a corresponding indication field 17 exists, and G₁ in FIG. 1B is used to indicate whether a corresponding indication field 18 exists. When G₀ is 1, it indicates that the corresponding indication field 17 exists; and when G₀ is 0, it indicates that the corresponding indication field 17 does not exist, and in this case, the indication field 17 does not need to be included.

Certainly, on the basis of the foregoing, if the PHR 10 may further include more first power indication fields for second cells, sub-fields of the global indication field 19 may also be used to indicate whether the first power indication fields exist. For example, G₂ in FIG. 1B may be used to indicate whether another first power indication field (not shown in the figure) for a second cell except the indication fields 17 and 18 exists, and the same principle is applicable to G₃ and G₄.

When a value of each indication sub-field (such as 17i or 18i) belonging to a same first power indication field for a second cell is 0, the PHR 10 does not need to include the indication field, thereby saving air interface resources used by the UE to report PHRs. In addition, the base station side can also clearly know whether the first power indication field (17 or 18), corresponding to the global indication sub-field 19i, for the second cell exists.

The following describes, with reference to the PHRs 10 shown in FIG. 1A and FIG. 1B, the power headroom reporting apparatus and method, and the user equipment provided in the embodiments of the present invention.

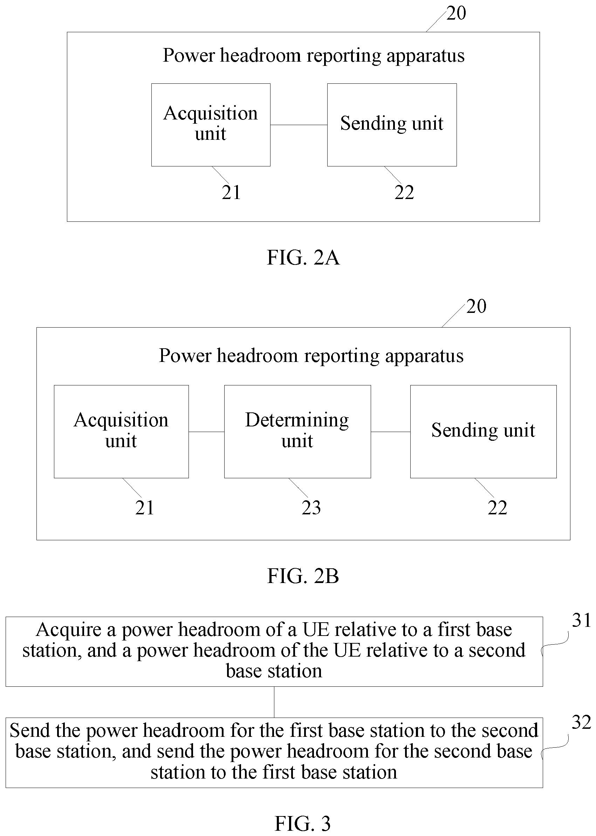

FIG. 2A is a schematic diagram of a power headroom reporting apparatus according to Embodiment 1 of the present invention. As shown in FIG. 2A, the power headroom reporting apparatus 20 (briefly referred to as the apparatus 20) provided in Embodiment 1 at least includes:
an acquisition unit 21, configured to acquire a power headroom of the apparatus 20 relative to a first base station and a power headroom of the apparatus 20 relative to a second base station; and
a sending unit 22, configured to send the power headroom for the first base station acquired by the acquisition unit 21 to the second base station, and send the power headroom for the second base station to the first base station, where
the power headroom for the first base station refers to a power headroom for one or more cells of the first base station corresponding to the apparatus 20, and the power headroom for the second base station refers to a power headroom for one or more cells of the second base station corresponding to the apparatus 20.

Specifically, by using PHRs 10, the sending unit 22 may send the power headroom for the first base station acquired by the acquisition unit 21 to the second base station, and send the power headroom for the second base station to the first base station, where
the power headroom for the first base station includes any one or a combination of the following power headrooms: a first-type power headroom for a first cell of the first base station, a second-type power headroom for the first cell of the first base station, and a first-type power headroom for a second cell of the first base station; and
the power headroom for the second base station includes any one or a combination of the following power headrooms: a first-type power headroom for a first cell of the second base station, a second-type power headroom for the first cell of the second base station, and a first-type power headroom for a second cell of the second base station.

As shown in FIG. 1B, corresponding to the power headroom for the first base station, a PHR 10 includes any one or a combination of the following power fields:
A. a first power field 11 for the first cell of the first base station, used to identify the first-type power headroom PH (Type 1, PCell_{MCG}) for the first cell of the first base station;
B. a second power field 12 for the first cell of the first base station, used to identify the second-type power headroom PH (Type 2, PCell_{MCG}) for the first cell of the first base station; and
C. a first power field 15 for the second cell of the first base station, used to identify the first-type power headroom, such as PH (Type 1, SCell_{MCG}), for the second cell of the first base station.

As shown in FIG. 1B, corresponding to the power headroom for the second base station, a PHR 10 further includes any one or a combination of the following power fields:
D. a first power field 13 for the first cell of the second base station, used to identify the first-type power headroom PH (Type 1, PCell_{SCG}) for the first cell of the second base station;
E. a second power field 14 for the first cell of the second base station, used to identify the second-type power headroom PH (Type 2, PCell_{SCG}) for the first cell of the second base station; and
F. a first power field 16 for the second cell of the second base station, used to identify the first-type power headroom, such as PH (Type 1, SCell_{SCG}), for the second cell of the second base station.

In addition, optionally, in a case in which there are multiple second base stations, the sending unit 22 is further configured to send a power headroom, acquired by the acquisition unit 21, of the apparatus 20 relative to any second base station to the other second base stations by using PHRs 10. In this way, any second base station can know power headrooms of the apparatus 20 relative to the other second base stations.

In addition, the sending unit 22 is further configured to send the power headroom for the first base station acquired by the acquisition unit 21 to the first base station, and send the power headroom for the second base station to the second base station itself.

In the prior art, a power headroom of a UE relative to a base station is only reported to the base station, and a base station can only know a power headroom of the UE relative to the base station itself; therefore, no base station can know power headroom situations of the UE relative to all base stations, and as a result, a power scheduling decision is not accurate enough. As can be seen from the foregoing, compared with the prior art, according to the power headroom reporting apparatus provided in Embodiment 1 of the present invention, the power headroom reporting apparatus can send a power headroom for a first base station to a second base station and send a power headroom for the second base station to the first base station, and in this way, the first base station can perform power scheduling according to the power headroom for the second base station, and the second base station also can perform power scheduling according to the power headroom for the first base station; and therefore, a power scheduling decision made by a base station becomes more accurate.

Embodiment 2 of the present invention provides a power headroom reporting apparatus 20, and for a structure of the apparatus 20, reference may also be made to FIG. 2A.

As shown in FIG. 1A, on the basis of Embodiment 1, the apparatus 20 provided in Embodiment 2 further includes a first power indication field 17 for a second cell. The indication field 17 includes at least one first power indication sub-field 17i, and the indication sub-field 17i is used to indicate whether a corresponding first power field for a second cell of the first base station or a corresponding first power field for a second cell of the second base station exists, that is, indicating whether a corresponding power field 15 exists.

As shown in FIG. 1B, on the basis of Embodiment 1, the apparatus 20 provided in Embodiment 2 further includes a first power indication field 17 for the second cell of the first base station and a first power indication field 18 for the second cell of the second base station. Each of the indication field 17 and the indication field 18 includes at least one power indication sub-field; an indication sub-field 17i of the indication field 17 is used to indicate whether a power field 15 exists; and an indication sub-field 18i of the indication field 18 is used to indicate whether a power field 16 exists.

When the first power field (the power field 15 or 16), corresponding to the indication sub-field 17i or 18i, for a second cell does not exist, the power field does not need to be reported by using the PHR 10, thereby saving air interface resources used by the UE to report PHRs. In addition, a base station side can clearly know through the indication sub-field 17i and 18i whether the first power fields, corresponding to the indication sub-field 17i and 18i, for the second cells exist.

In the prior art, no base station can know power headroom situations of a UE relative to all base stations, and as a result, a power scheduling decision is not accurate enough. As can be seen from the foregoing, compared with the prior art, according to the power headroom reporting apparatus provided in Embodiment 2 of the present invention, the power headroom reporting apparatus can send a power headroom for a first base station to a second base station and send a power headroom for the second base station to the first base station, and in this way, the first base station can perform power scheduling according to the power headroom for the second base station, and the second base station also can perform power scheduling according to the power headroom for the first base station; and therefore, a power scheduling decision made by a base station becomes more accurate.

Embodiment 3 of the present invention provides a power headroom reporting apparatus 20, and for a structure of the apparatus 20, reference may also be made to FIG. 2A. As shown in FIG. 1B, on the basis of the PHR 10 involved in Embodiment 2, a PHR 10 involved in Embodiment 3 further includes a global indication field 19, where
the global indication field 19 includes multiple global indication sub-fields 19i, and the global indication sub-fields 19i respectively correspond to a first power indication field for the second cell of the first base station and a first power indication field for the second cell of the second base station, and are used to indicate whether a first power indication field (an indication field 17 or 18) for a corresponding second cell exists.

In the prior art, when all values of the sub-fields 17i and 18i of the first power indication fields 17 and 18 for the second cell are 0s (that is, corresponding power fields 15 and 16 do not need to be reported or do not exist), the PHR still needs to include the indication fields 17 and 18, which causes waste of air interface resources. Compared with the prior art, according to the PHR involved in Embodiment 3, the global indication sub-fields 19i can indicate whether the corresponding first power indication fields 17 and 18 for the second cells exist, and when all the values of the sub-fields 17i and 18i of the indication fields 17 and 18 are 0s, the PHR does not need to include the indication fields 17 and 18; therefore air interface resources used by the UE to report PHRs can be saved.

In the prior art, no base station can know power headroom situations of a UE relative to all base stations, and as a result, a power scheduling decision is not accurate enough. As can be seen from the foregoing, compared with the prior art, according to the power headroom reporting apparatus provided in Embodiment 3 of the present invention, the power headroom reporting apparatus can send a power headroom for a first base station to a second base station and send a power headroom for the second base station to the first base station, and in this way, the first base station can perform power scheduling according to the power headroom for the second base station, and the second base station also can perform power scheduling according to the power headroom for the first base station; and therefore, a power scheduling decision made by a base station becomes more accurate.

FIG. 2B is a schematic structural diagram of a power headroom reporting apparatus according to Embodiment 4 of the present invention. As shown in FIG. 2B, the power headroom reporting apparatus 20 provided in Embodiment 4 of the present invention has a structure similar to structures of the power headroom reporting apparatuses 20 provided in Embodiment 1, Embodiment 2, and Embodiment 3 of the present invention. On the basis of including the acquisition unit 21 and the sending unit 22, the apparatus 20 in Embodiment 4 further includes:
a determining unit 23, configured to determine that any one or a combination of condition 1, condition 2, condition 5, and condition 6 is satisfied, and determine that any one or a combination of condition 3, condition 4, condition 5, and condition 6 is satisfied, where
definitions of the conditions are as follows:
   condition 1: a variation of a sum of first-type power headrooms of the apparatus 20 relative to the first base station from a sum of first-type power headrooms, previously sent to the second base station, of the apparatus 20 relative to the first base station exceeds a first preset threshold;
   condition 2: a variation of a sum of the first-type power headroom of the apparatus 20 relative to the second cell of the first base station and the second-type power headroom of the apparatus 20 relative to the first cell of the first base station from a sum of a first-type power headroom, previously sent to the second base station, of the apparatus 20 relative to the second cell of the first base station and a second-type power headroom, previously sent to the second base station, of the apparatus 20 relative to the first cell of the first base station exceeds a second preset threshold;
   condition 3: a variation of a sum of first-type power headrooms of the apparatus 20 relative to the second base station from a sum of first-type power headrooms, previously sent to the first base station, of the apparatus 20 relative to the second base station exceeds a third preset threshold;
   condition 4: a variation of a sum of the first-type power headroom of the apparatus 20 relative to the second cell of the second base station and the second-type power headroom of the apparatus 20 relative to the first cell of the second base station from a sum of a first-type power headroom, previously sent to the first base station, of the apparatus 20 relative to the second cell of the second base station and a second-type power headroom, previously sent to the first base station, of the apparatus 20 relative to the first cell of the second base station exceeds a fourth preset threshold;
   condition 5: a sum of the first-type power headrooms of the apparatus 20 relative to the first base station and the first-type power headrooms of the apparatus 20 relative to the second base station is less than a fifth preset threshold or greater than a sixth preset threshold; and
   condition 6: a sum of the second-type power headroom of the apparatus 20 relative to the first cell of the first base station, the first-type power headroom of the apparatus 20 relative to the second cell of the first base station, the second-type power headroom of the apparatus 20 relative to the first cell of the second base station, and the first-type power headroom of the apparatus 20 relative to the second cell of the second base station is less than a seventh preset threshold or greater than an eighth preset threshold.

Optionally, the apparatus 20 may acquire the multiple preset thresholds from the first base station or the second base station. Specifically, the acquisition unit 21 may be configured to receive any one or a combination of the first preset threshold, the second preset threshold, the third preset threshold, the fourth preset threshold, the fifth preset threshold, the sixth preset threshold, the seventh preset threshold, and the eighth preset threshold, which is delivered by the first base station or the second base station.

The first preset threshold may be set in the following manner. For example, as found through statistics, a variation of the sum of the first-type power headrooms of the apparatus 20 relative to the first base station from the sum of the first-type power headrooms, previously sent to the second base station, of the apparatus 20 relative to the first base station ranges from 0 to |Q|; therefore, the first preset threshold may be set to a, and a value of a may be 10% to 80% of IQI. To ensure that the variation is large enough, preferably, the value of a is set to be relatively large. The second, third, and fourth preset thresholds may be set similarly.

An objective of setting the first preset threshold is: only when the variation of the sum of the first-type power headrooms of the apparatus 20 relative to the first base station from the sum of the first-type power headrooms, previously sent to the second base station, of the apparatus 20 relative to the first base station is large enough (for example, greater than a), the power headroom for the first base station needs to be reported to the second base station, so that the second base station performs power scheduling according to the latest power headroom for the first base station. When an absolute value of the difference is not large enough (for example, still less than a), the second base station may continue to perform power scheduling according to the previously acquired power headroom for the first base station, which can save air interface resources for reporting the power headroom.

The fifth preset threshold and the sixth preset threshold may be set in the following manner. For example, as found through statistics, the sum of the first-type power headrooms of the apparatus 20 relative to the first base station and the first-type power headrooms of the apparatus 20 relative to the second base station generally ranges from |M| to |N| (|N| is greater than |M|); therefore, the fifth preset threshold may be set to |M|-b, and the sixth preset threshold may be set to |N|+c, where b and c are positive numbers, a value of b may be 10% to 30% of |N|-|M|, and a value of c may be 20% to 40% of INI-IMI. The seventh preset threshold and the eighth preset threshold may also be set similarly.

An objective of setting the fifth preset threshold and the sixth preset threshold is: only when the sum of the first-type power headrooms of the apparatus 20 relative to the first base station and the first-type power headrooms of the apparatus 20 relative to the second base station is small enough (for example, less than |M|-b) or large enough (for example, greater than |N|+c), the power headroom for the second base station needs to be reported to the first base station, so that the first base station performs power scheduling according to the latest power headroom for the second base station; and the power headroom for the first base station needs to be reported to the second base station, so that the second base station performs power scheduling according to the latest power headroom for the first base station. When the sum of the first-type power headrooms of the apparatus 20 relative to the first base station and the first-type power headrooms of the apparatus 20 relative to the second base station is still greater than the fifth preset threshold and less than the sixth preset threshold, the first base station may continue to perform power scheduling according the previously acquired power headroom for the second base station, and the second base station may continue to perform power scheduling according to the previously acquired power headroom for the first base station, which can save air interface resources for reporting the power headroom.

It should be noted that, the description of the preset thresholds is merely exemplary, and does not limit the protection scope of the present invention. A person skilled in the art may perform the settings according to actual requirements.

In Embodiment 4, according to a determining result of the determining unit 23, the sending unit 22 is specifically configured to:
in a case in which the determining unit 23 determines that the power headrooms of the apparatus 20 satisfy any one or a combination of condition 1, condition 2, condition 5, and condition 6, report the power headroom for the first base station to the second base station; and
in a case in which the determining unit 23 determines that the power headrooms of the apparatus 20 satisfy any one or a combination of condition 3, condition 4, condition 5, and condition 6, report the power headroom for the second base station to the first base station.

In a case in which the preset conditions are not satisfied, the power headroom reporting apparatus 20 does not report the PHR 10 to the first base station or the second base station; therefore, air interface resources can be further saved.

The determining performed by the determining unit 23 requires operation processing costs, that is, consumes processing resources, and reporting the power headroom by the sending unit 23 also needs to consume air interface resources, but the first base station or the second base station possibly does not configure an air interface resource for the sending unit 22; therefore, even in a case in which the determining unit 23 obtains through determining that the power headroom for the second base station needs to be reported to the first base station or the power headroom for the first base station needs to be reported to the second base station, it is possible that the sending unit 22 cannot perform reporting because no air interface resource is allocated to the sending unit. Therefore, before the sending unit 22 performs reporting, the determining unit 23 is further configured to: determine that the apparatus 20 has a first resource, where the first resource is used to send uplink data to the first base station; and further configured to determine that the apparatus 20 has a second resource, where the second resource is used to send uplink data to the second base station. The sending unit 22 may report the power headroom for the second base station to the first base station after the determining unit 23 determines that the apparatus 20 has the first resource, and may report the power headroom for the first base station to the second base station after the determining unit 23 determines that the apparatus 20 has the second resource.

Processing resources consumed by the determining unit 23 to determine whether the apparatus 20 has the first resource and the second resource are fewer than processing resources consumed to determine whether condition 1 to condition 6 are satisfied; therefore, processing resource consumption can be reduced by determining whether the apparatus 20 has the first resource and the second resource before determining condition 1 to condition 6.

Further, the determining unit 23 is further configured to: determine that the first resource can accommodate a power headroom report, where the power headroom report includes the power headroom for the second base station, and determine that the second resource can accommodate a power headroom report, where the power headroom report includes the power headroom for the first base station. After the first resource and the second resource satisfy the foregoing requirements separately, the determining unit 23 determines whether condition 1 to condition 6 are satisfied. In a case in which neither the first resource nor the second resource satisfies the foregoing requirements, the determining unit 23 does not need to determine whether condition 1 to condition 6 are satisfied; therefore processing resource consumption can be reduced.

To further describe the power headroom reporting apparatus provided in this embodiment of the present invention, the following provides description by using a variant embodiment of Embodiment 4 as an example. In this embodiment, description is provided by using an example in which the power headroom reporting apparatus is disposed in the UE, the first base station is an MeNB and the second base station is an SeNB. For the power headroom reporting apparatus provided in this embodiment, reference may be still made to FIG. 2A and FIG. 2B.

In the apparatus 20, the acquisition unit 21 is configured to acquire a power headroom of the UE relative to the MeNB and a power headroom of the UE relative to the SeNB. The power headroom for the MeNB includes any one or a combination of PH (Type 1, PCell_{MCG}), PH (Type 2, PCell_{MCG}), and PH (Type 1, SCell_{MCG} 1), and the power headroom for the SeNB includes any one or a combination of PH (Type 1, PCell_{SCG}), PH (Type 2, PCell_{SCG}), and PH (Type 1, SCell_{SCG} 1).

The sending unit 22 is further configured to: by using PHRs, send the power headroom, acquired by the acquisition unit 21, of the UE relative to the MeNB to the SeNB and send the power headroom of the UE relative to the SeNB to the MeNB.

It should be noted that, the MeNB may also perform power scheduling according to a power headroom for the MeNB that is sent in advance by the UE, and the SeNB may also perform power scheduling according to a power headroom for the SeNB that is sent in advance by the UE.

In the solutions of the prior art, the power headroom for the SeNB that the UE will report to the SeNB may include PH (Type 1, PCell_{SCG}) and PH (Type 1, SCell_{SCG} 1), but does not include PH (Type 2, PCell_{SCG}); therefore, the SeNB even cannot acquire all power headrooms of the UE relative to the SeNB. In this embodiment, power headrooms, reported to the MeNB and SeNB by the UE, of the UE relative to the SeNB may all include PH (Type 2, PCell_{SCG}), and in this way, the MeNB and the SeNB can acquire all power headrooms of the UE relative to the SeNB, and the accuracy and reasonableness of power scheduling decisions made by the MeNB and the SeNB are improved accordingly.

Before the sending unit 22 sends the power headroom for the MeNB and the power headroom for the SeNB, the determining unit 23 may further determine whether the power headroom for the MeNB and the power headroom for the SeNB satisfy reporting conditions, that is, the foregoing condition 1 to condition 6. For how a power headroom is reported according to a determining result, reference may be made to the descriptions of the foregoing embodiments, and details are not described herein again.

In the prior art, no eNB can know power headroom situations of a UE relative to all eNBs, and as a result, a power scheduling decision made by the eNB is not accurate enough. As can be seen from the foregoing, compared with the prior art, according to the power headroom reporting apparatus provided in the variant embodiment of Embodiment 4 of the present invention, the power headroom reporting apparatus can send a power headroom for an MeNB to an SeNB and send a power headroom for the SeNB to the MeNB, and in this way, the MeNB can perform power scheduling according to the power headroom for the SeNB, and the SeNB can perform power scheduling according to the power headroom for the MeNB; and therefore, power scheduling decisions made by the eNBs become more accurate.

FIG. 3 is a flowchart of a power headroom reporting method according to Embodiment 5 of the present invention, and the method is applied to a user equipment UE. As shown in FIG. 3, the power headroom reporting method provided in this embodiment of the present invention includes:
Step 31: Acquire a power headroom of the UE relative to a first base station and a power headroom of the UE relative to a second base station.
Step 32: Send the power headroom for the first base station to the second base station, and send the power headroom for the second base station to the first base station.

The power headroom for the first base station refers to a power headroom for one or more cells of the first base station corresponding to the UE, and the power headroom for the second base station refers to a power headroom for one or more cells of the second base station corresponding to the UE.

Specifically, by using PHRs, the UE may send the power headroom for the first base station to the second base station, and send the power headroom for the second base station to the first base station, where
the power headroom for the first base station includes any one or a combination of the following power headrooms: a first-type power headroom for a first cell of the first base station, a second-type power headroom for the first cell of the first base station, and a first-type power headroom for a second cell of the first base station; and
the power headroom for the second base station includes any one or a combination of the following power headrooms: a first-type power headroom for a first cell of the second base station, a second-type power headroom for the first cell of the second base station, and a first-type power headroom for a second cell of the second base station.

Corresponding to the power headroom for the first base station, a PHR includes any one or a combination of the following power fields:
A. a first power field for the first cell of the first base station, used to identify the first-type power headroom for the first cell of the first base station;
B. a second power field for the first cell of the first base station, used to identify the second-type power headroom for the first cell of the first base station; and
C. a first power field for the second cell of the first base station, used to identify the first-type power headroom for the second cell of the first base station.

Corresponding to the power headroom for the second base station, a PHR further includes any one or a combination of the following power fields:
D. a first power field for the first cell of the second base station, used to identify the first-type power headroom for the first cell of the second base station;
E. a second power field for the first cell of the second base station, used to identify the second-type power headroom for the first cell of the second base station; and
F. a first power field for the second cell of the second base station, used to identify the first-type power headroom for the second cell of the second base station.

Preferably, in a case in which the second cell of the first base station and the second cell of the second base station are separately numbered, or in a case in which second cells corresponding to multiple second base stations are separately numbered, in the PHR, a same field may be set for cells corresponding to a same base station, and different fields are set for cells corresponding to different base stations, so as to distinguish between different cell groups. In this way, even though the second cell of the first base station and the second cell of the second base station are separately numbered, the PHR can still be used subsequently.

In addition to sending the power headroom for the first base station to the second base station and sending the power headroom for the second base station to the first base station, in a case in which there are multiple second base stations, the UE may also send a power headroom of the UE relative to any second base station to the other second base stations by using PHRs. In this way, any second base station can know power headrooms of the UE relative to the other second base stations.

In addition, the UE may also send the power headroom for the first base station to the first base station, and send the power headroom for the second base station to the second base station itself.

In the prior art, a power headroom of a UE relative to a base station is only reported to the base station, and a base station can only know a power headroom of the UE relative to the base station itself; therefore, no base station can know power headroom situations of the UE relative to all base stations, and as a result, a power scheduling decision is not accurate enough. As can be seen from the foregoing, compared with the prior art, according to the power headroom reporting method provided in Embodiment 5 of the present invention, a UE can send a power headroom for a first base station to a second base station and send a power headroom for the second base station to the first base station, and in this way, the first base station can perform power scheduling according to the power headroom for the second base station, and the second base station also can perform power scheduling according to the power headroom for the first base station; and therefore, a power scheduling decision made by a base station becomes more accurate.

In a variant embodiment of Embodiment 5, the PHR further includes one first power indication field for a second cell, where the indication field includes at least one first power indication sub-field.

The first power indication sub-field for the second cell is used to indicate whether a corresponding first power field for the second cell of the first base station or a corresponding first power field for the second cell of the second base station exists.

When the power field corresponding to the first power indication sub-field for the second cell does not exist, the PHR does not include the power field, thereby saving air interface resources used by the UE to report PHRs.

In another variant embodiment of Embodiment 5, the PHR further includes a first power indication field for the second cell of the first base station and a first power indication field for the second cell of the second base station, where
both the first power indication field for the second cell of the first base station and the first power indication field for the second cell of the second base station include at least one first power indication sub-field, where the first power indication sub-field for the second cell in the first power indication field for the second cell of the first base station is used to indicate whether the first power field for the second cell of the first base station exists, and the first power indication sub-field for the second cell in the first power indication field for the second cell of the second base station is used to indicate whether the first power field for the second cell of the second base station exists.

When the power field corresponding to the first power indication sub-field for the second cell of the first base station or the first power indication sub-field for the second cell of the second base station does not exist, the PHR does not need to include the power field, thereby saving air interface resources used by the UE to report PHRs.

In another variant embodiment of Embodiment 5, the PHR further includes a global indication field, where the global indication field includes multiple global indication sub-fields. The global indication sub-fields respectively correspond to the first power indication field for the second cell of the first base station and the first power indication field for the second cell of the second base station, and are used to indicate whether a first power indication field for a corresponding second cell exists. When all values of the sub-fields of the first power indication field for the second cell are 0s, the PHR does not need to include the first power indication field for the second cell; therefore air interface resources used by the UE to report PHRs can be saved.

In another variant embodiment of Embodiment 5, before the sending the power headroom for the first base station to the second base station, and sending the power headroom for the second base station to the first base station, the method further includes:
determining that any one or a combination of condition 1, condition 2, condition 5, and condition 6 is satisfied; and determining that any one or a combination of condition 3, condition 4, condition 5, and condition 6 is satisfied, where definitions of the conditions are as follows:
condition 1: a variation of a sum of first-type power headrooms of the UE relative to the first base station from a sum of first-type power headrooms, previously sent to the second base station, of the UE relative to the first base station exceeds a first preset threshold;
condition 2: a variation of a sum of the first-type power headroom of the UE relative to the second cell of the first base station and the second-type power headroom of the UE relative to the first cell of the first base station from a sum of a first-type power headroom, previously sent to the second base station, of the UE relative to the second cell of the first base station and a second-type power headroom, previously sent to the second base station, of the UE relative to the first cell of the first base station exceeds a second preset threshold;
condition 3: a variation of a sum of first-type power headrooms of the UE relative to the second base station from a sum of first-type power headrooms, previously sent to the first base station, of the UE relative to the second base station exceeds a third preset threshold;
condition 4: a variation of a sum of the first-type power headroom of the UE relative to the second cell of the second base station and the second-type power headroom of the UE relative to the first cell of the second base station from a sum of a first-type power headroom, previously sent to the first base station, of the UE relative to the second cell of the second base station and a second-type power headroom, previously sent to the first base station, of the UE relative to the first cell of the second base station exceeds a fourth preset threshold;
condition 5: a sum of the first-type power headrooms of the UE relative to the first base station and the first-type power headrooms of the UE relative to the second base station is less than a fifth preset threshold or greater than a sixth preset threshold; and
condition 6: a sum of the second-type power headroom of the UE relative to the first cell of the first base station, the first-type power headroom of the UE relative to the second cell of the first base station, the second-type power headroom of the UE relative to the first cell of the second base station, and the first-type power headroom of the UE relative to the second cell of the second base station is less than a seventh preset threshold or greater than an eighth preset threshold.

Then the PHR is reported to the first base station or the second base station according to a determining result. Specifically, in a case in which it is determined that any one or a combination of condition 1, condition 2, condition 5, and condition 6 is satisfied, the power headroom for the first base station is reported to the second base station, and in a case in which any one or a combination of condition 3, condition 4, condition 5, and condition 6 is satisfied, the power headroom for the second base station is reported to the first base station.

In a case in which the preset conditions are not satisfied, the UE may not report any PHR to the first base station or the second base station; therefore, air interface resources can be further saved. Further, in a case in which the preset conditions are satisfied, the UE reports the PHR to the first base station or the second base station, which can help the first base station or the second base station to know power consumption situations of the UE in time, which, on one hand, avoids over-scheduling of power of the UE, and on the other hand, improves the efficiency of power scheduling.

Optionally, before determining whether the conditions are satisfied, the UE may further receive any one or a combination of the first preset threshold, the second preset threshold, the third preset threshold, the fourth preset threshold, the fifth preset threshold, the sixth preset threshold, the seventh preset threshold, and the eighth preset threshold, which is delivered by the first base station or the second base station.

Further, the UE cannot report the power headroom in a case in which no air interface resource is allocated to the UE; therefore, before determining whether any one or a combination of condition 3, condition 4, condition 5, and condition 6 is satisfied, the UE may first determine whether a first resource is allocated to the UE itself, where the first resource is used to send uplink data to the first base station; and before determining whether any one or a combination of condition 1, condition 2, condition 5, and condition 6 is satisfied, the UE may first determine whether a second resource is allocated to the UE itself, where the second resource is used to send uplink data to the second base station. If determining that the first resource is not allocated to the UE, the UE does not need to determine whether any one or a combination of condition 3, condition 4, condition 5, and condition 6 is satisfied, nor to determine whether the power headroom for the second base station needs to be reported to the first base station; and if determining that the second resource is not allocated to the UE, the UE does not need to determine whether any one or a combination of condition 1, condition 2, condition 5, and condition 6 is satisfied, nor to determine whether the power headroom for the first base station needs to be reported to the second base station. On the contrary, if determining that the first resource is allocated to the UE, the UE determines whether any one or a combination of condition 3, condition 4, condition 5, and condition 6 is satisfied, to determine whether the power headroom for the second base station needs to be reported to the first base station; and if determining that the second resource is allocated to the UE, the UE determines whether any one or a combination of condition 1, condition 2, condition 5, and condition 6 is satisfied, to determine whether the power headroom for the first base station needs to be reported to the second base station.

Processing resources consumed to determine whether the UE has the first resource and the second resource are fewer than processing resources consumed to determine whether condition 1 to condition 6 are satisfied; therefore, processing resource consumption can be reduced by determining whether the UE has the first resource and the second resource before determining condition 1 to condition 6.

Further, after determining that the UE has the first resource, and before determining that any one or a combination of condition 3, condition 4, condition 5, and condition 6 is satisfied, the UE may further determine whether the first resource can accommodate a power headroom report including the power headroom for the second base station; and after determining that the UE has the second resource, and before determining that any one or a combination of condition 1, condition 2, condition 5, and condition 6 is satisfied, the UE may further determine whether the second resource can accommodate a power headroom report including the power headroom for the first base station. After determining that the first resource can accommodate the power headroom report including the power headroom for the second base station and that the second resource can accommodate the power headroom report including the power headroom for the first base station, the UE performs determining about condition 1 to condition 6; otherwise, the determining is not needed, which can reduce processing resource consumption.

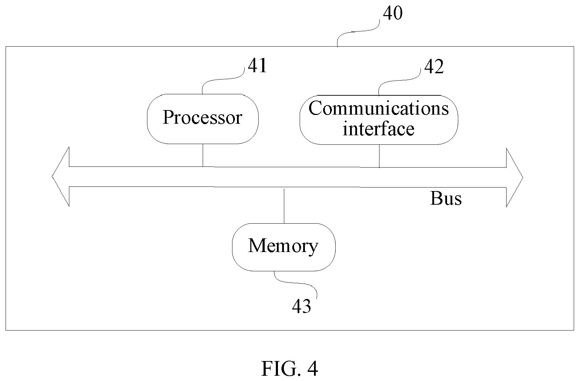

FIG. 4 is a schematic structural diagram of a user equipment according to Embodiment 6 of the present invention. As shown in FIG. 4, the user equipment 40 in this embodiment includes: at least one processor 41, a communications interface 42, a memory 43, and a bus. The processor 41, a transceiver 42, and the memory 43 are connected and implement mutual communication by using the bus. The bus may be an industry standard architecture (Industry Standard Architecture, ISA for short) bus, a peripheral component interconnect (Peripheral Component, PCI for short) bus, an extended industry standard architecture (Extended Industry Standard Architecture, EISA for short) bus, or the like. The bus may be classified into an address bus, a data bus, a control bus, and the like. For the convenience of representation, it is represented by only one bold line in FIG. 4, which, however, does not indicate that there is only one bus or one type of bus.

The processor 41 is configured to acquire a power headroom of the user equipment 40 relative to a first base station, and a power headroom of the user equipment 40 relative to a second base station, where the power headroom for the first base station refers to a power headroom for one or more cells of the first base station, and the power headroom for the second base station refers to a power headroom for one or more cells of the second base station.

The transceiver 42 is configured to send the power headroom for the first base station acquired by the processor 41 to the second base station, and send the power headroom for the second base station to the first base station.

The power headroom for the first base station refers to a power headroom for one or more cells of the first base station corresponding to the user equipment 40, and the power headroom for the second base station refers to a power headroom for one or more cells of the second base station corresponding to the user equipment 40.

Specifically, the transceiver 42 is specifically configured to: by using PHRs, send the power headroom for the first base station acquired by the processor 41 to the second base station, and send the power headroom for the second base station to the first base station.

Optionally, in a case in which there are multiple second base stations, the transceiver 42 is further configured to send a power headroom, acquired by the processor 41, of the apparatus 40 relative to any second base station to the other second base stations by using PHRs. In this way, any second base station can know power headrooms of the apparatus 20 relative to the other second base stations.

In addition, the transceiver 42 is further configured to send the power headroom for the first base station to the first base station, and send the power headroom for the second base station to the second base station itself, where
the power headroom for the first base station includes any one or a combination of the following power headrooms: a first-type power headroom for a first cell of the first base station, a second-type power headroom for the first cell of the first base station, and a first-type power headroom for a second cell of the first base station; and the power headroom for the second base station includes any one or a combination of the following power headrooms: a first-type power headroom for a first cell of the second base station, a second-type power headroom for the first cell of the second base station, and a first-type power headroom for a second cell of the second base station.

Corresponding to the any one or the combination included in the power headroom for the first base station and the any one or the combination included in the power headroom for the second base station, the PHR includes any one or a combination of the following power fields:
a first power field for the first cell of the first base station, used to identify the first-type power headroom for the first cell of the first base station;
a second power field for the first cell of the first base station, used to identify the second-type power headroom for the first cell of the first base station;
a first power field for the second cell of the first base station, used to identify the first-type power headroom for the second cell of the first base station;
a first power field for the first cell of the second base station, used to identify the first-type power headroom for the first cell of the second base station;
a second power field for the first cell of the second base station, used to identify the second-type power headroom for the first cell of the second base station; and
a first power field for the second cell of the second base station, used to identify the first-type power headroom for the second cell of the second base station.

To save air interface resources used by the UE to report PHRs, the PHR further includes one first power indication field for a second cell, and the first power indication field for the second cell includes at least one first power indication sub-field, where the first power indication sub-field for the second cell is used to indicate whether a corresponding first power field for the second cell of the first base station or a corresponding first power field for the second cell of the second base station exists.

To save air interface resources used by the UE to report PHRs, optionally, the PHR further includes a first power indication field for the second cell of the first base station and a first power indication field for the second cell of the second base station;
both the first power indication field for the second cell of the first base station and the first power indication field for the second cell of the second base station include at least one first power indication sub-field;
the first power indication sub-field for the second cell in the first power indication field for the second cell of the first base station is used to indicate whether the first power field for the second cell of the first base station exists; and
the first power indication sub-field for the second cell in the first power indication field for the second cell of the second base station is used to indicate whether the first power field for the second cell of the second base station exists.

To further save air interface resources used by the UE to report PHRs, the PHR further includes a global indication field, where the global indication field includes multiple global indication sub-fields;
the global indication sub-fields respectively correspond to the first power indication field for the second cell of the first base station and the first power indication field for the second cell of the second base station; and
each of the global indication sub-fields is used to indicate whether a first power indication field for a corresponding second cell exists.

In addition, the processor 41 is further configured to perform determining about condition 1 to condition 6, and perform determining about a first resource and a second resource. For specific descriptions, reference may be made to the foregoing embodiments, and details are not described herein again.

The processor 41 may be a central processing unit (Central Processing Unit, CPU for short), or an application specific integrated circuit ASIC (Application Specific Integrated Circuit, ASIC for short), or one or more integrated circuits configured to implement this embodiment of the present invention. The transceiver 42 is mainly configured to implement communication between the user equipment 40 in this embodiment and another device or apparatus (such as a first access point). The memory 43 may be configured to store executable program code, where the program code includes a computer operation instruction. The memory 43 may include a high-speed RAM memory, and may further include a non-volatile memory (non-volatile memory), for example, at least one disk memory.

In the prior art, a power headroom of a UE relative to a base station is only reported to the base station, and a base station can only know a power headroom of the UE relative to the base station itself; therefore, no base station can know power headroom situations of the UE relative to all base stations, and as a result, a power scheduling decision is not accurate enough. As can be seen from the foregoing, compared with the prior art, according to the user equipment provided in Embodiment 6 of the present invention, the UE can send a power headroom for a first base station to a second base station and send a power headroom for the second base station to the first base station, and in this way, the first base station can perform power scheduling according to the power headroom for the second base station, and the second base station also can perform power scheduling according to the power headroom for the first base station; and therefore, a power scheduling decision made by a base station becomes more accurate.

Each embodiment in the specification is described with emphasis. The same or similar parts in the embodiments are references to each other. Each embodiment focuses on description of a difference from the other embodiments.

It should be noted that the described apparatus embodiment is merely exemplary. The units described as separate parts may or may not be physically separate, and parts displayed as units may or may not be physical units, may be located in one position, or may be distributed on a plurality of network units. A part or all of the modules may be selected according to actual needs to achieve the objectives of the solutions of the embodiments. In the accompanying drawings of the apparatus embodiments provided by the present invention, connection relationships between modules indicate that the modules have communication connections with each other, which may be specifically implemented as one or more communications buses or signal cables. A person of ordinary skill in the art may understand and implement the embodiments of the present invention without creative efforts.

A person of ordinary skill in the art should understand that each aspect of the present invention or a possible implementation manner of each aspect may be specifically implemented as a system, a method or a computer program product. Therefore, each aspect of the present invention or each possible implementation manner of each aspect may use forms of complete hardware embodiments, complete software embodiments (including firmware, resident software, and the like), or embodiments combining software and hardware, which are all referred to as "circuit", "module", or "system" herein. In addition, each aspect of the present invention or the possible implementation manner of each aspect may use a form of a computer program product, where the computer program product refers to computer readable program code stored in a computer readable medium.

The computer readable medium may be a computer readable signal medium or a computer readable storage medium. The computer readable storage medium includes but is not limited to electronic, magnetic, optical, electromagnetic, infrared, or semiconductor systems, devices, or apparatuses, or any appropriate combination of the foregoing items, such as a random access memory (RAM), a read-only memory (ROM), an erasable programmable read-only memory (EPROM or flash memory), a fiber, and a portable read-only memory (CD-ROM).

A processor in a computer reads computer readable program code stored in a computer readable medium, so that the processor can execute a function and an action specified in each step or a combination of steps in a flowchart, and an apparatus is generated to implement a function and an action specified in each block or a combination of blocks in a block diagram.

## Claims

1. A power headroom reporting apparatus, comprising:
an acquisition unit (21), configured to acquire a power headroom of the apparatus relative to a first base station, and a power headroom of the apparatus relative to a second base station, wherein the power headroom for the first base station refers to a power headroom for one or more cells of the first base station corresponding to the apparatus, and the power headroom for the second base station refers to a power headroom for one or more cells of the second base station corresponding to the apparatus; and
a sending unit (22), configured to send the power headroom for the first base station acquired by the acquisition unit to the second base station, and send the power headroom for the second base station to the first base station;
wherein the power headroom for the first base station comprises: a first-type power headroom for a first cell of the first base station, a second-type power headroom for the first cell of the first base station, and a first-type power headroom for a second cell of the first base station; and
the power headroom for the second base station comprises: a first-type power headroom for a first cell of the second base station, a second-type power headroom for the first cell of the second base station, and a first-type power headroom for a second cell of the second base station.

2. The apparatus according to claim 1, wherein the sending unit (22) is specifically configured to:
by using power headroom reports, send the power headroom for the first base station acquired by the acquisition unit to the second base station, and send the power headroom for the second base station to the first base station.

3. The apparatus according to claim 1, wherein there are multiple second base stations, and the sending unit (22) is further configured to:
send a power headroom of the apparatus relative to any second base station to the other second base stations by using power headroom reports.

4. The apparatus according to claim 2 or 3, wherein the power headroom report comprises any one or a combination of the following power fields:
a first power field for the first cell of the first base station, used to identify the first-type power headroom for the first cell of the first base station;
a second power field for the first cell of the first base station, used to identify the second-type power headroom for the first cell of the first base station;
a first power field for the second cell of the first base station, used to identify the first-type power headroom for the second cell of the first base station;
a first power field for the first cell of the second base station, used to identify the first-type power headroom for the first cell of the second base station;
a second power field for the first cell of the second base station, used to identify the second-type power headroom for the first cell of the second base station; and
a first power field for the second cell of the second base station, used to identify the first-type power headroom for the second cell of the second base station.

5. The apparatus according to claim 4, wherein the power headroom report further comprises one first power indication field for a second cell; and
the first power indication field for the second cell comprises at least one first power indication sub-field, wherein
the first power indication sub-field for the second cell is used to indicate whether a corresponding first power field for the second cell of the first base station or a corresponding first power field for the second cell of the second base station exists.

6. The apparatus according to claim 4, wherein the power headroom report further comprises a first power indication field for the second cell of the first base station and a first power indication field for the second cell of the second base station;
both the first power indication field for the second cell of the first base station and the first power indication field for the second cell of the second base station comprise at least one first power indication sub-field;
the first power indication sub-field for the second cell in the first power indication field for the second cell of the first base station is used to indicate whether the first power field for the second cell of the first base station exists; and
the first power indication sub-field for the second cell in the first power indication field for the second cell of the second base station is used to indicate whether the first power field for the second cell of the second base station exists.

7. The apparatus according to claim 6, wherein the power headroom report further comprises:
a global indication field, wherein the global indication field comprises multiple global indication sub-fields;
the global indication sub-fields respectively correspond to the first power indication field for the second cell of the first base station and the first power indication field for the second cell of the second base station; and
each of the global indication sub-fields is used to indicate whether a first power indication field for a corresponding second cell exists.

8. The apparatus according to any one of claims 1 to 7, wherein the apparatus further comprises:
a determining unit (23), configured to determine that any one or a combination of condition 1, condition 2, condition 5, and condition 6 is satisfied;
the determining unit is further configured to determine that any one or a combination of condition 3, condition 4, condition 5, and condition 6 is satisfied, wherein
definitions of condition 1, condition 2, condition 3, condition 4, condition 5, and condition 6 are as follows:
condition 1: a variation of a sum of first-type power headrooms of the apparatus relative to the first base station from a sum of first-type power headrooms, previously sent to the second base station, of the apparatus relative to the first base station exceeds a first preset threshold;
condition 2: a variation of a sum of the first-type power headroom of the apparatus relative to the second cell of the first base station and the second-type power headroom of the apparatus relative to the first cell of the first base station from a sum of a first-type power headroom, previously sent to the second base station, of the apparatus relative to the second cell of the first base station and a second-type power headroom, previously sent to the second base station, of the apparatus relative to the first cell of the first base station exceeds a second preset threshold;
condition 3: a variation of a sum of first-type power headrooms of the apparatus relative to the second base station from a sum of first-type power headrooms, previously sent to the first base station, of the apparatus relative to the second base station exceeds a third preset threshold;
condition 4: a variation of a sum of the first-type power headroom of the apparatus relative to the second cell of the second base station and the second-type power headroom of the apparatus relative to the first cell of the second base station from a sum of a first-type power headroom, previously sent to the first base station, of the apparatus relative to the second cell of the second base station and a second-type power headroom, previously sent to the first base station, of the apparatus relative to the first cell of the second base station exceeds a fourth preset threshold;
condition 5: a sum of the first-type power headrooms of the apparatus relative to the first base station and the first-type power headrooms of the apparatus relative to the second base station is less than a fifth preset threshold or greater than a sixth preset threshold; and
condition 6: a sum of the second-type power headroom of the apparatus relative to the first cell of the first base station, the first-type power headroom of the apparatus relative to the second cell of the first base station, the second-type power headroom of the apparatus relative to the first cell of the second base station, and the first-type power headroom of the apparatus relative to the second cell of the second base station is less than a seventh preset threshold or greater than an eighth preset threshold; and
the sending unit is specifically configured to:
after the determining unit determines that any one or a combination of condition 1, condition 2, condition 5, and condition 6 is satisfied, report the power headroom for the first base station to the second base station; and
after the determining unit determines that any one or a combination of condition 3, condition 4, condition 5, and condition 6 is satisfied, report the power headroom for the second base station to the first base station.

9. A power headroom reporting method, applied to a user equipment, and comprising:
acquiring (31) a power headroom of the user equipment relative to a first base station, and a power headroom of the user equipment relative to a second base station, wherein the power headroom for the first base station refers to a power headroom for one or more cells of the first base station corresponding to the user equipment, and the power headroom for the second base station refers to a power headroom for one or more cells of the second base station corresponding to the user equipment; and
sending (32) the power headroom for the first base station to the second base station, and sending the power headroom for the second base station to the first base station;
wherein the power headroom for the first base station comprises: a first-type power headroom for a first cell of the first base station, a second-type power headroom for the first cell of the first base station, and a first-type power headroom for a second cell of the first base station; and
the power headroom for the second base station comprises: a first-type power headroom for a first cell of the second base station, a second-type power headroom for the first cell of the second base station, and a first-type power headroom for a second cell of the second base station.

10. The method according to claim 9, wherein the sending the power headroom for the first base station to the second base station, and sending the power headroom for the second base station to the first base station comprises:
by using power headroom reports, sending the power headroom for the first base station to the second base station, and sending the power headroom for the second base station to the first base station.

11. The method according to claim 9, wherein there are multiple second base stations, and the method further comprises:
sending a power headroom of the user equipment relative to any second base station to the other second base stations by using power headroom reports.

12. The method according to claim 10 or 11, wherein the power headroom report comprises any one or a combination of the following power fields:
a first power field for the first cell of the first base station, used to identify the first-type power headroom for the first cell of the first base station;
a second power field for the first cell of the first base station, used to identify the second-type power headroom for the first cell of the first base station;
a first power field for the second cell of the first base station, used to identify the first-type power headroom for the second cell of the first base station;
a first power field for the first cell of the second base station, used to identify the first-type power headroom for the first cell of the second base station;
a second power field for the first cell of the second base station, used to identify the second-type power headroom for the first cell of the second base station; and
a first power field for the second cell of the second base station, used to identify the first-type power headroom for the second cell of the second base station.

13. The method according to claim 12, wherein the power headroom report further comprises one first power indication field for a second cell; and
the first power indication field for the second cell comprises at least one first power indication sub-field, wherein
the first power indication sub-field for the second cell is used to indicate whether a corresponding first power field for the second cell of the first base station or a corresponding first power field for the second cell of the second base station exists.

14. The method according to claim 12, wherein the power headroom report further comprises a first power indication field for the second cell of the first base station and a first power indication field for the second cell of the second base station;
both the first power indication field for the second cell of the first base station and the first power indication field for the second cell of the second base station comprise at least one first power indication sub-field;
the first power indication sub-field for the second cell in the first power indication field for the second cell of the first base station is used to indicate whether the first power field for the second cell of the first base station exists; and
the first power indication sub-field for the second cell in the first power indication field for the second cell of the second base station is used to indicate whether the first power field for the second cell of the second base station exists.

15. The method according to claim 14, wherein the power headroom report further comprises:
a global indication field, wherein the global indication field comprises multiple global indication sub-fields;
the global indication sub-fields respectively correspond to the first power indication field for the second cell of the first base station and the first power indication field for the second cell of the second base station; and
each of the global indication sub-fields is used to indicate whether a first power indication field for a corresponding second cell exists.

16. The method according to any one of claims 9 to 15, wherein before the sending the power headroom for the first base station to the second base station, and sending the power headroom for the second base station to the first base station, the method further comprises:
determining that any one or a combination of condition 1, condition 2, condition 5, and condition 6 is satisfied; and
determining that any one or a combination of condition 3, condition 4, condition 5, and condition 6 is satisfied, wherein
definitions of condition 1, condition 2, condition 3, condition 4, condition 5, and condition 6 are as follows:
condition 1: a variation of a sum of first-type power headrooms of the user equipment relative to the first base station from a sum of first-type power headrooms, previously sent to the second base station, of the user equipment relative to the first base station exceeds a first preset threshold;
condition 2: a variation of a sum of the first-type power headroom of the user equipment relative to the second cell of the first base station from the second-type power headroom of the user equipment relative to the first cell of the first base station and a sum of a first-type power headroom, previously sent to the second base station, of the user equipment relative to the second cell of the first base station and a second-type power headroom, previously sent to the second base station, of the user equipment relative to the first cell of the first base station exceeds a second preset threshold;
condition 3: a variation of a sum of first-type power headrooms of the user equipment relative to the second base station from a sum of first-type power headrooms, previously sent to the first base station, of the user equipment relative to the second base station exceeds a third preset threshold;
condition 4: a variation of a sum of the first-type power headroom of the user equipment relative to the second cell of the second base station and the second-type power headroom of the user equipment relative to the first cell of the second base station from a sum of a first-type power headroom, previously sent to the first base station, of the user equipment relative to the second cell of the second base station and a second-type power headroom, previously sent to the first base station, of the user equipment relative to the first cell of the second base station exceeds a fourth preset threshold;
condition 5: a sum of the first-type power headrooms of the user equipment relative to the first base station and the first-type power headrooms of the user equipment relative to the second base station is less than a fifth preset threshold or greater than a sixth preset threshold; and
condition 6: a sum of the second-type power headroom of the user equipment relative to the first cell of the first base station, the first-type power headroom of the user equipment relative to the second cell of the first base station, the second-type power headroom of the user equipment relative to the first cell of the second base station, and the first-type power headroom of the user equipment relative to the second cell of the second base station is less than a seventh preset threshold or greater than an eighth preset threshold; and
the sending the power headroom for the first base station to the second base station, and sending the power headroom for the second base station to the first base station comprises:
after the determining that any one or a combination of condition 1, condition 2, condition 5, and condition 6 is satisfied, reporting the power headroom for the first base station to the second base station; and
after the determining that any one or a combination of condition 3, condition 4, condition 5, and condition 6 is satisfied, reporting the power headroom for the second base station to the first base station.

## Patentansprüche

1. Vorrichtung zur Meldung von Leistungsreserven, umfassend:
eine Erfassungseinheit (21), die konfiguriert ist, um eine Leistungsreserve der Vorrichtung in Bezug auf eine erste Basisstation und eine Leistungsreserve der Vorrichtung in Bezug auf eine zweite Basisstation zu erfassen, wobei sich die Leistungsreserve für die erste Basisstation auf eine Leistungsreserve für eine oder mehrere Zellen der ersten Basisstation bezieht, die der Vorrichtung entsprechen, und die Leistungsreserve für die zweite Basisstation sich auf eine Leistungsreserve für eine oder mehrere Zellen der zweiten Basisstation bezieht, die der Vorrichtung entsprechen; und
eine Sendeeinheit (22), die konfiguriert ist, um die von der Erfassungseinheit erfasste Leistungsreserve für die erste Basisstation an die zweite Basisstation zu senden und die Leistungsreserve für die zweite Basisstation an die erste Basisstation zu senden;
wobei die Leistungsreserve für die erste Basisstation umfasst: eine Leistungsreserve des ersten Typs für eine erste Zelle der ersten Basisstation, eine Leistungsreserve des zweiten Typs für die erste Zelle der ersten Basisstation und eine Leistungsreserve des ersten Typs für eine zweite Zelle der ersten Basisstation; und
die Leistungsreserve für die zweite Basisstation umfasst: eine Leistungsreserve des ersten Typs für eine erste Zelle der zweiten Basisstation, eine Leistungsreserve des zweiten Typs für die erste Zelle der zweiten Basisstation und eine Leistungsreserve des ersten Typs für eine zweite Zelle der zweiten Basisstation.

2. Vorrichtung nach Anspruch 1, wobei die Sendeeinheit (22) insbesondere konfiguriert ist, um:
unter Verwendung von Leistungsreserveberichten die von der Erfassungseinheit erfasste Leistungsreserve für die erste Basisstation an die zweite Basisstation zu senden und die Leistungsreserve für die zweite Basisstation an die erste Basisstation zu senden.

3. Vorrichtung nach Anspruch 1, wobei mehrere zweite Basisstationen vorhanden sind und die Sendeeinheit (22) ferner konfiguriert ist, um:
eine Leistungsreserve der Vorrichtung in Bezug auf eine beliebige zweite Basisstation an die anderen zweiten Basisstationen unter Verwendung von Leistungsreserveberichten zu senden.

4. Vorrichtung nach Anspruch 2 oder 3, wobei der Leistungsreservebericht eines oder eine Kombination der folgenden Leistungsfelder umfasst:
ein erstes Leistungsfeld für die erste Zelle der ersten Basisstation, das verwendet wird, um die Leistungsreserve des ersten Typs für die erste Zelle der ersten Basisstation zu identifizieren;
ein zweites Leistungsfeld für die erste Zelle der ersten Basisstation, das verwendet wird, um die Leistungsreserve des zweiten Typs für die erste Zelle der ersten Basisstation zu identifizieren;
ein erstes Leistungsfeld für die zweite Zelle der ersten Basisstation, das verwendet wird, um die Leistungsreserve des ersten Typs für die zweite Zelle der ersten Basisstation zu identifizieren;
ein erstes Leistungsfeld für die erste Zelle der zweiten Basisstation, das verwendet wird, um die Leistungsreserve des ersten Typs für die erste Zelle der zweiten Basisstation zu identifizieren;
ein zweites Leistungsfeld für die erste Zelle der zweiten Basisstation, das verwendet wird, um die Leistungsreserve des zweiten Typs für die erste Zelle der zweiten Basisstation zu identifizieren; und
ein erstes Leistungsfeld für die zweite Zelle der zweiten Basisstation, das verwendet wird, um die Leistungsreserve des ersten Typs für die zweite Zelle der zweiten Basisstation zu identifizieren.

5. Vorrichtung nach Anspruch 4, wobei der Leistungsreservebericht ferner ein erstes Leistungsanzeigefeld für eine zweite Zelle umfasst; und
das erste Leistungsanzeigefeld für die zweite Zelle mindestens ein erstes Leistungsanzeigeunterfeld umfasst, wobei
das erste Leistungsanzeigeunterfeld für die zweite Zelle verwendet wird, um anzuzeigen, ob ein entsprechendes erstes Leistungsfeld für die zweite Zelle der ersten Basisstation oder ein entsprechendes erstes Leistungsfeld für die zweite Zelle der zweiten Basisstation vorhanden ist.

6. Vorrichtung nach Anspruch 4, wobei der Leistungsreservebericht ferner ein erstes Leistungsanzeigefeld für die zweite Zelle der ersten Basisstation und ein erstes Leistungsanzeigefeld für die zweite Zelle der zweiten Basisstation umfasst;
sowohl das erste Leistungsanzeigefeld für die zweite Zelle der ersten Basisstation als auch das erste Leistungsanzeigefeld für die zweite Zelle der zweiten Basisstation mindestens ein erstes Leistungsanzeigeunterfeld umfassen;
das erste Leistungsanzeigeunterfeld für die zweite Zelle in dem ersten Leistungsanzeigefeld für die zweite Zelle der ersten Basisstation verwendet wird, um anzuzeigen, ob das erste Leistungsfeld für die zweite Zelle der ersten Basisstation vorhanden ist; und
das erste Leistungsanzeigeunterfeld für die zweite Zelle in dem ersten Leistungsanzeigefeld für die zweite Zelle der zweiten Basisstation verwendet wird, um anzuzeigen, ob das erste Leistungsfeld für die zweite Zelle der zweiten Basisstation vorhanden ist.

7. Vorrichtung nach Anspruch 6, wobei der Leistungsreservebericht ferner umfasst:
ein globales Anzeigefeld, wobei das globale Anzeigefeld mehrere globale Anzeigeunterfelder umfasst;
die globalen Anzeigefelder jeweils dem ersten Leistungsanzeigefeld für die zweite Zelle der ersten Basisstation und dem ersten Leistungsanzeigefeld für die zweite Zelle der zweiten Basisstation entsprechen; und
jedes der globalen Anzeigeunterfelder verwendet wird, um anzuzeigen, ob ein erstes Leistungsanzeigefeld für eine entsprechende zweite Zelle vorhanden ist.

8. Vorrichtung nach einem der Ansprüche 1 bis 7, wobei die Vorrichtung ferner umfasst:
eine Bestimmungseinheit (23), die konfiguriert ist, um zu bestimmen, dass eine oder eine Kombination von Bedingung 1, Bedingung 2, Bedingung 5 und Bedingung 6 erfüllt ist;
die Bestimmungseinheit ferner konfiguriert ist, um zu bestimmen, dass eine oder eine Kombination von Bedingung 3, Bedingung 4, Bedingung 5 und Bedingung 6 erfüllt ist, wobei
die Definitionen von Bedingung 1, Bedingung 2, Bedingung 3, Bedingung 4, Bedingung 5 und Bedingung 6 wie folgt lauten:
Bedingung 1: Eine Variation einer Summe der Leistungsreserven des ersten Typs der Vorrichtung in Bezug auf die erste Basisstation von einer Summe der zuvor an die zweite Basisstation gesendeten Leistungsreserven des ersten Typs der Vorrichtung in Bezug auf die erste Basisstation übersteigt einen ersten voreingestellten Schwellenwert;
Bedingung 2: Eine Variation einer Summe der Leistungsreserve des ersten Typs der Vorrichtung in Bezug auf die zweite Zelle der ersten Basisstation und der Leistungsreserve des zweiten Typs der Vorrichtung in Bezug auf die erste Zelle der ersten Basisstation von einer Summe einer zuvor an die zweite Basisstation gesendeten Leistungsreserve des ersten Typs der Vorrichtung in Bezug auf die zweite Zelle der ersten Basisstation und einer zuvor an die zweite Basisstation gesendeten Leistungsreserve des zweiten Typs der Vorrichtung in Bezug auf die erste Zelle der ersten Basisstation übersteigt einen zweiten voreingestellten Schwellenwert;
Bedingung 3: Eine Variation einer Summe der Leistungsreserven des ersten Typs der Vorrichtung in Bezug auf die zweite Basisstation von einer Summe der zuvor an die erste Basisstation gesendeten Leistungsreserven des ersten Typs der Vorrichtung in Bezug auf die zweite Basisstation übersteigt einen dritten voreingestellten Schwellenwert;
Bedingung 4: Eine Variation einer Summe der Leistungsreserve des ersten Typs der Vorrichtung in Bezug auf die zweite Zelle der zweiten Basisstation und der Leistungsreserve des zweiten Typs der Vorrichtung in Bezug auf die erste Zelle der zweiten Basisstation von einer Summe einer zuvor an die erste Basisstation gesendeten Leistungsreserve des ersten Typs der Vorrichtung in Bezug auf die zweite Zelle der zweiten Basisstation und einer zuvor an die erste Basisstation gesendeten Leistungsreserve des zweiten Typs der Vorrichtung in Bezug auf die erste Zelle der zweiten Basisstation übersteigt einen vierten voreingestellten Schwellenwert;
Bedingung 5: Eine Summe der Leistungsreserven des ersten Typs der Vorrichtung in Bezug auf die erste Basisstation und der ersten Leistungsreserven des ersten Typs der Vorrichtung in Bezug auf die zweite Basisstation ist kleiner als ein fünfter voreingestellter Schwellenwert oder größer als ein sechster voreingestellter Schwellenwert; und
Bedingung 6: Eine Summe der Leistungsreserve des zweiten Typs der Vorrichtung in Bezug auf die erste Zelle der ersten Basisstation, der Leistungsreserve des ersten Typs der Vorrichtung in Bezug auf die zweite Zelle der ersten Basisstation, der Leistungsreserve des zweiten Typs der Vorrichtung in Bezug auf die erste Zelle der zweiten Basisstation und der Leistungsreserve des ersten Typs der Vorrichtung in Bezug auf die zweite Zelle der zweiten Basisstation ist kleiner als ein siebter voreingestellter Schwellenwert oder größer als ein achter voreingestellter Schwellenwert; und
die Sendeeinheit ist insbesondere konfiguriert, um:
nachdem die Bestimmungseinheit bestimmt, dass eine oder eine Kombination der Bedingung 1, der Bedingung 2, der Bedingung 5 und der Bedingung 6 erfüllt ist, die Leistungsreserve für die erste Basisstation an die zweite Basisstation zu melden; und
nachdem die Bestimmungseinheit bestimmt, dass eine oder eine Kombination der Bedingung 3, der Bedingung 4, der Bedingung 5 und der Bedingung 6 erfüllt ist, die Leistungsreserve für die zweite Basisstation an die erste Basisstation zu melden.

9. Verfahren zur Meldung von Leistungsreserven, das auf ein Benutzergerät angewendet wird und umfasst:
Erfassen (31) einer Leistungsreserve des Benutzergeräts in Bezug auf eine erste Basisstation und einer Leistungsreserve des Benutzergeräts in Bezug auf eine zweite Basisstation, wobei sich die Leistungsreserve für die erste Basisstation auf eine Leistungsreserve für eine oder mehrere Zellen der ersten Basisstation bezieht, die dem Benutzergerät entsprechen, und die Leistungsreserve für die zweite Basisstation sich auf eine Leistungsreserve für eine oder mehrere Zellen der zweiten Basisstation bezieht, die dem Benutzergerät entsprechen; und
Senden (32) der Leistungsreserve für die erste Basisstation an die zweite Basisstation und Senden des Leistungsreserve für die zweite Basisstation an die erste Basisstation;
wobei die Leistungsreserve für die erste Basisstation umfasst: eine Leistungsreserve des ersten Typs für eine erste Zelle der ersten Basisstation, eine Leistungsreserve des zweiten Typs für die erste Zelle der ersten Basisstation und eine Leistungsreserve des ersten Typs für eine zweite Zelle der ersten Basisstation;
und die Leistungsreserve für die zweite Basisstation umfasst: eine Leistungsreserve des ersten Typs für eine erste Zelle der zweiten Basisstation, eine Leistungsreserve des zweiten Typs für die erste Zelle der zweiten Basisstation und eine Leistungsreserve des ersten Typs für eine zweite Zelle der zweiten Basisstation.

10. Verfahren nach Anspruch 9, wobei das Senden der Leistungsreserve für die erste Basisstation an die zweite Basisstation und das Senden der Leistungsreserve für die zweite Basisstation an die erste Basisstation umfasst:
Senden, unter Verwendung von Leistungsreserveberichten, der Leistungsreserve für die erste Basisstation an die zweite Basisstation und Senden der Leistungsreserve für die zweite Basisstation an die erste Basisstation.

11. Verfahren nach Anspruch 9, wobei mehrere zweite Basisstationen vorhanden sind und das Verfahren ferner umfasst:
Senden einer Leistungsreserve des Benutzergeräts in Bezug auf eine beliebige zweite Basisstation an die anderen zweiten Basisstationen unter Verwendung von Leistungsreserveberichten.

12. Verfahren nach Anspruch 10 oder 11, wobei der Leistungsreservebericht eines oder eine Kombination der folgenden Leistungsfelder umfasst:
ein erstes Leistungsfeld für die erste Zelle der ersten Basisstation, das verwendet wird, um die Leistungsreserve des ersten Typs für die erste Zelle der ersten Basisstation zu identifizieren;
ein zweites Leistungsfeld für die erste Zelle der ersten Basisstation, das verwendet wird, um die Leistungsreserve des zweiten Typs für die erste Zelle der ersten Basisstation zu identifizieren;
ein erstes Leistungsfeld für die zweite Zelle der ersten Basisstation, das verwendet wird, um die Leistungsreserve des ersten Typs für die zweite Zelle der ersten Basisstation zu identifizieren;
ein erstes Leistungsfeld für die erste Zelle der zweiten Basisstation, das verwendet wird, um die Leistungsreserve des ersten Typs für die erste Zelle der zweiten Basisstation zu identifizieren;
ein zweites Leistungsfeld für die erste Zelle der zweiten Basisstation, das verwendet wird, um die Leistungsreserve des zweiten Typs für die erste Zelle der zweiten Basisstation zu identifizieren; und
ein erstes Leistungsfeld für die zweite Zelle der zweiten Basisstation, das verwendet wird, um die Leistungsreserve des ersten Typs für die zweite Zelle der zweiten Basisstation zu identifizieren.

13. Verfahren nach Anspruch 12, wobei der Leistungsreservebericht ferner ein erstes Leistungsanzeigefeld für eine zweite Zelle umfasst; und
das erste Leistungsanzeigefeld für die zweite Zelle mindestens ein erstes Leistungsanzeigeunterfeld umfasst, wobei
das erste Leistungsanzeigeunterfeld für die zweite Zelle verwendet wird, um anzuzeigen, ob ein entsprechendes erstes Leistungsfeld für die zweite Zelle der ersten Basisstation oder ein entsprechendes erstes Leistungsfeld für die zweite Zelle der zweiten Basisstation vorhanden ist.

14. Verfahren nach Anspruch 12, wobei der Leistungsreservebericht ferner ein erstes Leistungsanzeigefeld für die zweite Zelle der ersten Basisstation und ein erstes Leistungsanzeigefeld für die zweite Zelle der zweiten Basisstation umfasst;
sowohl das erste Leistungsanzeigefeld für die zweite Zelle der ersten Basisstation als auch das erste Leistungsanzeigefeld für die zweite Zelle der zweiten Basisstation mindestens ein erstes Leistungsanzeigeunterfeld umfassen;
das erste Leistungsanzeigeunterfeld für die zweite Zelle in dem ersten Leistungsanzeigefeld für die zweite Zelle der ersten Basisstation verwendet wird, um anzuzeigen, ob das erste Leistungsfeld für die zweite Zelle der ersten Basisstation vorhanden ist; und
das erste Leistungsanzeigeunterfeld für die zweite Zelle in dem ersten Leistungsanzeigefeld für die zweite Zelle der zweiten Basisstation verwendet wird, um anzuzeigen, ob das erste Leistungsfeld für die zweite Zelle der zweiten Basisstation vorhanden ist.

15. Verfahren nach Anspruch 14, wobei der Leistungsreservebericht ferner umfasst:
ein globales Anzeigefeld, wobei das globale Anzeigefeld mehrere globale Anzeigeunterfelder umfasst;
die globalen Anzeigefelder jeweils dem ersten Leistungsanzeigefeld für die zweite Zelle der ersten Basisstation und dem ersten Leistungsanzeigefeld für die zweite Zelle der zweiten Basisstation entsprechen; und
jedes der globalen Anzeigeunterfelder verwendet wird, um anzuzeigen, ob ein erstes Leistungsanzeigefeld für eine entsprechende zweite Zelle vorhanden ist.

16. Verfahren nach einem der Ansprüche 9 bis 15, wobei das Verfahren ferner vor dem Senden der Leistungsreserve für die erste Basisstation an die zweite Basisstation und dem Senden der Leistungsreserve für die zweite Basisstation an die erste Basisstation umfasst:
Bestimmen, dass eine oder eine Kombination von Bedingung 1, Bedingung 2, Bedingung 5 und Bedingung 6 erfüllt ist; und
Bestimmen, dass eine oder eine Kombination von Bedingung 3, Bedingung 4, Bedingung 5 und Bedingung 6 erfüllt ist, wobei
die Definitionen von Bedingung 1, Bedingung 2, Bedingung 3, Bedingung 4, Bedingung 5 und Bedingung 6 wie folgt lauten:
Bedingung 1: Eine Variation einer Summe der Leistungsreserven des ersten Typs des Benutzergeräts in Bezug auf die erste Basisstation von einer Summe der zuvor an die zweite Basisstation gesendeten Leistungsreserven des ersten Typs des Benutzergeräts in Bezug auf die erste Basisstation übersteigt einen ersten voreingestellten Schwellenwert;
Bedingung 2: Eine Variation einer Summe der Leistungsreserve des ersten Typs des Benutzergeräts in Bezug auf die zweite Zelle der ersten Basisstation von der Leistungsreserve des zweiten Typs des Benutzergeräts in Bezug auf die erste Zelle der ersten Basisstation und einer Summe einer zuvor an die zweite Basisstation gesendeten Leistungsreserve des ersten Typs des Benutzergeräts in Bezug auf die zweite Zelle der ersten Basisstation und einer zuvor an die zweite Basisstation gesendeten Leistungsreserve des zweiten Typs des Benutzergeräts in Bezug auf die erste Zelle der ersten Basisstation übersteigt einen zweiten voreingestellten Schwellenwert;
Bedingung 3: Eine Variation einer Summe der Leistungsreserven des ersten Typs des Benutzergeräts in Bezug auf die zweite Basisstation von einer Summe der zuvor an die erste Basisstation gesendeten Leistungsreserven des ersten Typs des Benutzergeräts in Bezug auf die zweite Basisstation übersteigt einen dritten voreingestellten Schwellenwert;
Bedingung 4: Eine Variation einer Summe der Leistungsreserve des ersten Typs des Benutzergeräts in Bezug auf die zweite Zelle der zweiten Basisstation und der Leistungsreserve des zweiten Typs des Benutzergeräts in Bezug auf die erste Zelle der zweiten Basisstation von einer Summe einer zuvor an die erste Basisstation gesendeten Leistungsreserve des ersten Typs des Benutzergeräts in Bezug auf die zweite Zelle der zweiten Basisstation und einer zuvor an die erste Basisstation gesendeten Leistungsreserve des zweiten Typs des Benutzergeräts in Bezug auf die erste Zelle der zweiten Basisstation übersteigt einen vierten voreingestellten Schwellenwert;
Bedingung 5: Eine Summe der Leistungsreserven des ersten Typs des Benutzergeräts in Bezug auf die erste Basisstation und der ersten Leistungsreserven des ersten Typs des Benutzergeräts in Bezug auf die zweite Basisstation ist kleiner als ein fünfter voreingestellter Schwellenwert oder größer als ein sechster voreingestellter Schwellenwert; und
Bedingung 6: Eine Summe der Leistungsreserve des zweiten Typs des Benutzergeräts in Bezug auf die erste Zelle der ersten Basisstation, der Leistungsreserve des ersten Typs des Benutzergeräts in Bezug auf die zweite Zelle der ersten Basisstation, der Leistungsreserve des zweiten Typs des Benutzergeräts in Bezug auf die erste Zelle der zweiten Basisstation und der Leistungsreserve des ersten Typs des Benutzergeräts in Bezug auf die zweite Zelle der zweiten Basisstation ist kleiner als ein siebter voreingestellter Schwellenwert oder größer als ein achter voreingestellter Schwellenwert; und
das Senden der Leistungsreserve für die erste Basisstation an die zweite Basisstation und das Senden der Leistungsreserve für die zweite Basisstation an die erste Basisstation umfasst:
nach dem Bestimmen, dass eine oder eine Kombination der Bedingung 1, der Bedingung 2, der Bedingung 5 und der Bedingung 6 erfüllt ist, Melden der Leistungsreserve für die erste Basisstation an die zweite Basisstation; und
nach dem Bestimmen, dass eine oder eine Kombination der Bedingung 3, der Bedingung 4, der Bedingung 5 und der Bedingung 6 erfüllt ist, Melden der Leistungsreserve für die zweite Basisstation an die erste Basisstation.

## Revendications

1. Appareil d'indication de réserve de puissance, comprenant :
une unité d'acquisition (21) configurée pour acquérir une réserve de puissance de l'appareil relative à une première station de base, et une réserve de puissance de l'appareil relative à une seconde station de base, dans lequel la réserve de puissance pour la première station de base fait référence à une réserve de puissance pour une ou
plusieurs cellules de la première station de base correspondant à l'appareil, et la réserve de puissance pour la seconde station de base fait référence à une réserve de puissance pour une ou plusieurs cellules de la seconde station de base correspondant à l'appareil ; et
une unité d'envoi (22), configurée pour envoyer la réserve de puissance pour la première station de base acquise par l'unité d'acquisition à la seconde station de base, et envoyer la réserve de puissance pour la seconde station de base à la première station de base ;
dans lequel la réserve de puissance pour la première station de base comprend : une réserve de puissance du premier type pour une première cellule de la première station de base, une réserve de puissance du second type pour la première cellule de la première station de base, et une réserve de puissance du premier type pour une seconde cellule de la première station de base ; et
la réserve de puissance pour la seconde station de base comprend : une réserve de puissance du premier type pour une première cellule de la seconde station de base, une réserve de puissance du second type pour la première cellule de la seconde station de base, et une réserve de puissance du premier type pour une seconde cellule de la seconde station de base.

2. Appareil selon la revendication 1, dans lequel l'unité d'envoi (22) est spécifiquement configurée pour :
à l'aide d'indications de réserve de puissance, envoyer la réserve de puissance pour la première station de base acquise par l'unité d'acquisition à la seconde station de base, et envoyer la réserve de puissance pour la seconde station de base à la première station de base.

3. Appareil selon la revendication 1, dans lequel il existe plusieurs secondes stations de base, et l'unité d'envoi (22) est en outre configurée pour :
envoyer une réserve de puissance de l'appareil relative à une seconde station de base quelconque aux autres secondes stations de base en utilisant des indications de réserve de puissance.

4. Appareil selon la revendication 2 ou 3, dans lequel l'indication de réserve de puissance comprend l'un quelconque ou une combinaison des champs de puissance suivants :
un premier champ de puissance pour la première cellule de la première station de base, utilisé pour identifier la réserve de puissance du premier type pour la première cellule de la première station de base ;
un second champ de puissance pour la première cellule de la première station de base, utilisé pour identifier la réserve de puissance du second type pour la première cellule de la première station de base ;
un premier champ de puissance pour la seconde cellule de la première station de base, utilisé pour identifier la réserve de puissance du premier type pour la seconde cellule de la première station de base ;
un premier champ de puissance pour la première cellule de la seconde station de base, utilisé pour identifier la réserve de puissance du premier type pour la première cellule de la seconde station de base ;
un second champ de puissance pour la première cellule de la seconde station de base, utilisé pour identifier la réserve de puissance du second type pour la première cellule de la seconde station de base ; et
un premier champ de puissance pour la seconde cellule de la seconde station de base, utilisé pour identifier la réserve de puissance du premier type pour la seconde cellule de la seconde station de base.

5. Appareil selon la revendication 4, dans lequel l'indication de réserve de puissance comprend en outre un premier champ d'indication de puissance pour une seconde cellule ; et
le premier champ d'indication de puissance pour la seconde cellule comprend au moins un premier sous-champ d'indication de puissance, dans lequel le premier sous-champ d'indication de puissance pour la seconde cellule est utilisé pour indiquer s'il existe un premier champ de puissance correspondant pour la seconde cellule de la première station de base ou un premier champ de puissance correspondant pour la seconde cellule de la seconde station de base.

6. Appareil selon la revendication 4, dans lequel l'indication de réserve de puissance comprend en outre un premier champ d'indication de puissance pour la seconde cellule de la première station de base et un premier champ d'indication de puissance pour la seconde cellule de la seconde station de base ;
le premier champ d'indication de puissance pour la seconde cellule de la première station de base et le premier champ d'indication de puissance pour la seconde cellule de la seconde station de base comprennent au moins un premier sous-champ d'indication de puissance ;
le premier sous-champ d'indication de puissance pour la seconde cellule dans le premier champ d'indication de puissance pour la seconde cellule de la première station de base est utilisé pour indiquer si le premier champ de puissance pour la seconde cellule de la première station de base existe ; et
le premier sous-champ d'indication de puissance pour la seconde cellule dans le premier champ d'indication de puissance pour la seconde cellule de la seconde station de base est utilisé pour indiquer si le premier champ de puissance pour la seconde cellule de la seconde station de base existe.

7. Appareil selon la revendication 6, dans lequel l'indication de réserve de puissance comprend en outre :
un champ d'indication globale, le champ d'indication globale comprenant de multiples sous-champs d'indication globale ;
les sous-champs d'indication globale correspondent respectivement au premier champ d'indication de puissance pour la seconde cellule de la première station de base et au premier champ d'indication de puissance pour la seconde cellule de la seconde station de base ; et
chacun des sous-champs d'indication globale est utilisé pour indiquer s'il existe un premier champ d'indication de puissance pour une seconde cellule correspondante.

8. Appareil selon l'une quelconque des revendications 1 à 7, dans lequel l'appareil comprend en outre :
une unité de détermination (23), configurée pour déterminer qu'une condition quelconque ou une combinaison de la condition 1, de la condition 2, de la condition 5 et de la condition 6 sont satisfaites ;
l'unité de détermination est en outre configurée pour déterminer qu'une condition quelconque ou une combinaison de la condition 3, de la condition 4, de la condition 5 et de la condition 6 sont satisfaites ; dans lequel
les définitions de la condition 1, de la condition 2, de la condition 3, de la condition 4, de la condition 5 et de la condition 6 sont les suivantes :
condition 1 : une variation d'une somme des réserves de puissance du premier type de l'appareil relatives à la première station de base à partir d'une somme des réserves de puissance du premier type, précédemment envoyées à la seconde station de base, de l'appareil relatives à la première station de base dépasse un premier seuil prédéfini ;
condition 2 : une variation d'une somme de la réserve de puissance du premier type de l'appareil relative à la seconde cellule de la première station de base et de la réserve de puissance du second type de l'appareil relative à la première cellule de la première station de base à partir d'une somme d'une réserve de puissance du premier type, précédemment envoyée à la seconde station de base de l'appareil relative à la seconde cellule de la première station de base et d'une réserve de puissance du second type, précédemment envoyée à la seconde station de base de l'appareil relative à la première cellule de la première station de base dépasse un second seuil prédéfini ;
condition 3 : une variation d'une somme des réserves de puissance du premier type de l'appareil relatives à la seconde station de base à partir d'une somme des réserves de puissance du premier type, précédemment envoyées à la première station de base de l'appareil relatives à la seconde station de base dépasse un troisième seuil prédéfini ;
condition 4 : une variation d'une somme de la réserve de puissance du premier type de l'appareil relative à la seconde cellule de la seconde station de base et de la réserve de puissance du second type de l'appareil relative à la première cellule de la seconde station de base à partir d'une somme d'une réserve de puissance du premier type, précédemment envoyée à la première station de base de l'appareil relative à la seconde cellule de la seconde station de base et d'une réserve de puissance du second type, précédemment envoyée à la première station de base de l'appareil relative à la première cellule de la seconde station de base dépasse un quatrième seuil prédéfini ;
condition 5 : une somme des réserves de puissance du premier type de l'appareil relatives à la première station de base et des réserves de puissance du premier type de l'appareil relatives à la seconde station de base est inférieure à un cinquième seuil prédéfini ou supérieure à un sixième seuil prédéfini ; et
condition 6 : une somme de la réserve de puissance du second type de l'appareil relative à la première cellule de la première station de base, de la réserve de puissance du premier type de l'appareil relative à la seconde cellule de la première station de base, de la réserve de puissance du second type de l'appareil relative à la première cellule de la seconde station de base, et de la réserve de puissance du premier type de l'appareil relative à la seconde cellule de la seconde station de base est inférieure à un septième seuil prédéfini ou supérieure à un huitième seuil prédéfini ; et
l'unité d'envoi est spécifiquement configurée pour :
une fois que l'unité de détermination a déterminé qu'une condition quelconque ou une combinaison de la condition 1, de la condition 2, de la condition 5 et de la condition 6 sont satisfaites, signaler la réserve de puissance pour la première station de base à la seconde station de base ; et
une fois que l'unité de détermination a déterminé qu'une condition quelconque ou une combinaison de la condition 3, de la condition 4, de la condition 5 et de la condition 6 sont satisfaites, signaler la réserve de puissance pour la seconde station de base à la première station de base.

9. Procédé d'indication de réserve de puissance, appliqué à un équipement d'utilisateur, et comprenant les étapes consistant à :
acquérir (31) une réserve de puissance de l'équipement d'utilisateur relative à une première station de base et une réserve de puissance de l'équipement d'utilisateur relative à une seconde station de base, dans lequel la réserve de puissance pour la première station de base fait référence à une réserve de puissance pour une ou plusieurs cellules de la première station de base correspondant à l'équipement d'utilisateur, et la réserve de puissance pour la seconde station de base fait référence à une réserve de puissance pour une ou plusieurs cellules de la seconde station de base correspondant à l'équipement d'utilisateur ; et
envoyer (32) la réserve de puissance pour la première station de base à la seconde station de base et envoyer la réserve de puissance pour la seconde station de base à la première station de base ;
dans lequel la réserve de puissance pour la première station de base comprend : une réserve de puissance du premier type pour une première cellule de la première station de base, une réserve de puissance du second type pour la première cellule de la première station de base, et une réserve de puissance du premier type pour une seconde cellule de la première station de base ; et
la réserve de puissance pour la seconde station de base comprend : une réserve de puissance du premier type pour une première cellule de la seconde station de base, une réserve de puissance du second type pour la première cellule de la seconde station de base, et une réserve de puissance du premier type pour une seconde cellule de la seconde station de base.

10. Procédé selon la revendication 9, dans lequel l'envoi de la réserve de puissance pour la première station de base à la seconde station de base, et l'envoi de la réserve de puissance pour la seconde station de base à la première station de base comprennent : à l'aide d'indications de réserve de puissance, l'envoi de la réserve de puissance pour la première station de base à la seconde station de base, et l'envoi de la réserve de puissance pour la seconde station de base à la première station de base.

11. Procédé selon la revendication 9, dans lequel il existe plusieurs secondes stations de base, et le procédé comprend en outre l'étape consistant à :
envoyer une réserve de puissance de l'équipement d'utilisateur relative à une seconde station de base quelconque aux autres secondes stations de base en utilisant des indications de réserve de puissance.

12. Procédé selon la revendication 10 ou 11, dans lequel l'indication de réserve de puissance comprend l'un quelconque ou une combinaison des champs de puissance suivants :
un premier champ de puissance pour la première cellule de la première station de base, utilisé pour identifier la réserve de puissance du premier type pour la première cellule de la première station de base ;
un second champ de puissance pour la première cellule de la première station de base, utilisé pour identifier la réserve de puissance du second type pour la première cellule de la première station de base ;
un premier champ de puissance pour la seconde cellule de la première station de base, utilisé pour identifier la réserve de puissance du premier type pour la seconde cellule de la première station de base ;
un premier champ de puissance pour la première cellule de la seconde station de base, utilisé pour identifier la réserve de puissance du premier type pour la première cellule de la seconde station de base ;
un second champ de puissance pour la première cellule de la seconde station de base, utilisé pour identifier la réserve de puissance du second type pour la première cellule de la seconde station de base ; et
un premier champ de puissance pour la seconde cellule de la seconde station de base, utilisé pour identifier la réserve de puissance du premier type pour la seconde cellule de la seconde station de base.

13. Procédé selon la revendication 12, dans lequel l'indication de réserve de puissance comprend en outre un premier champ d'indication de puissance pour une seconde cellule ; et
le premier champ d'indication de puissance pour la seconde cellule comprend au moins un premier sous-champ d'indication de puissance, dans lequel le premier sous-champ d'indication de puissance pour la seconde cellule est utilisé pour indiquer s'il existe un premier champ de puissance correspondant pour la seconde cellule de la première station de base ou un premier champ de puissance correspondant pour la seconde cellule de la seconde station de base.

14. Procédé selon la revendication 12, dans lequel l'indication de réserve de puissance comprend en outre un premier champ d'indication de puissance pour la seconde cellule de la première station de base et un premier champ d'indication de puissance pour la seconde cellule de la seconde station de base ;
le premier champ d'indication de puissance pour la seconde cellule de la première station de base et le premier champ d'indication de puissance pour la seconde cellule de la seconde station de base comprennent au moins un premier sous-champ d'indication de puissance ;
le premier sous-champ d'indication de puissance pour la seconde cellule dans le premier champ d'indication de puissance pour la seconde cellule de la première station de base est utilisé pour indiquer si le premier champ de puissance pour la seconde cellule de la première station de base existe ; et
le premier sous-champ d'indication de puissance pour la seconde cellule dans le premier champ d'indication de puissance pour la seconde cellule de la seconde station de base est utilisé pour indiquer si le premier champ de puissance pour la seconde cellule de la seconde station de base existe.

15. Procédé selon la revendication 14, dans lequel l'indication de réserve de puissance comprend en outre :
un champ d'indication globale, dans lequel le champ d'indication globale comprend plusieurs sous-champs d'indication globale ;
les sous-champs d'indication globale correspondent respectivement au premier champ d'indication de puissance pour la seconde cellule de la première station de base et au premier champ d'indication de puissance pour la seconde cellule de la seconde station de base ; et
chacun des sous-champs d'indication globale est utilisé pour indiquer s'il existe un premier champ d'indication de puissance pour une seconde cellule correspondante.

16. Procédé selon l'une quelconque des revendications 9 à 15, dans lequel avant d'envoyer la réserve de puissance pour la première station de base à la seconde station de base et d'envoyer la réserve de puissance pour la seconde station de base à la première station de base, le procédé comprend en outre les étapes consistant à :
déterminer qu'une condition quelconque ou une combinaison de la condition 1, de la condition 2, de la condition 5 et de la condition 6 sont satisfaites ; et
déterminer qu'une condition quelconque ou une combinaison de la condition 3, de la condition 4, de la condition 5 et de la condition 6 sont satisfaites, dans lequel les définitions de la condition 1, de la condition 2, de la condition 3, de la condition 4, de la condition 5 et de la condition 6 sont les suivantes :
condition 1 : une variation d'une somme des réserves de puissance du premier type de l'équipement d'utilisateur relatives à la première station de base à partir d'une somme des réserves de puissance du premier type, précédemment envoyées à la seconde station de base, de l'équipement d'utilisateur relatives à la première station de base dépasse un premier seuil prédéfini ;
condition 2 : une variation d'une somme de la réserve de puissance du premier type de l'équipement d'utilisateur relative à la seconde cellule de la première station de base à partir de la réserve de puissance du second type de l'équipement d'utilisateur relative à la première cellule de la première station de base et une somme d'une réserve de puissance du premier type, précédemment envoyée à la seconde station de base de l'équipement d'utilisateur relative à la seconde cellule de la première station de base et une réserve de puissance du second type, précédemment envoyée à la seconde station de base de l'équipement d'utilisateur relative à la première cellule de la première station de base dépasse un second seuil prédéfini ;
condition 3 : une variation d'une somme des réserves de puissance du premier type de l'équipement d'utilisateur relatives à la seconde station de base à partir d'une somme des réserves de puissance du premier type, précédemment envoyées à la première station de base de l'équipement d'utilisateur relatives à la seconde station de base dépasse un troisième seuil prédéfini ;
condition 4 : une variation d'une somme de la réserve de puissance du premier type de l'équipement d'utilisateur relative à la seconde cellule de la seconde station de base et de la réserve de puissance du second type de l'équipement d'utilisateur relative à la première cellule de la seconde station de base, à partir d'une somme d'une réserve de puissance du premier type, envoyée précédemment à la première station de base de l'équipement d'utilisateur relative à la seconde cellule de la seconde station de base et d'une réserve de puissance du second type, précédemment envoyée à la première station de base de l'équipement d'utilisateur relative à la première cellule de la seconde station de base dépasse un quatrième seuil prédéfini ;
condition 5 : une somme des réserves de puissance du premier type de l'équipement d'utilisateur relatives à la première station de base et des réserves de puissance du premier type de l'équipement d'utilisateur relatives à la seconde station de base est inférieure à un cinquième seuil prédéfini ou supérieure à un sixième seuil prédéfini ; et
condition 6 : une somme de la réserve de puissance du second type de l'équipement d'utilisateur relative à la première cellule de la première station de base, de la réserve de puissance du premier type de l'équipement d'utilisateur relative à la seconde cellule de la première station de base, de la réserve de puissance du second type de l'équipement d'utilisateur relative à la première cellule de la seconde station de base, et de la réserve de puissance du premier type de l'équipement d'utilisateur relative à la seconde cellule de la seconde station de base est inférieure à un septième seuil prédéfini ou supérieure à un huitième seuil prédéfini ; et
l'envoi de la réserve de puissance pour la première station de base à la seconde station de base et l'envoi de la réserve de puissance pour la seconde station de base à la première station de base comprend les étapes consistant à :
après la détermination du fait qu'une condition quelconque ou une combinaison de la condition 1, de la condition 2, de la condition 5 et de la condition 6 sont satisfaites, signaler la réserve de puissance pour la première station de base à la seconde station de base ; et
après la détermination du fait qu'une condition quelconque ou une combinaison de la condition 3, de la condition 4, de la condition 5 et de la condition 6 sont satisfaites, signaler la réserve de puissance pour la seconde station de base à la première station de base.
